# EUROPEAN PATENT APPLICATION

(11) **EP 4 642 032 A1**
(43) Date of publication of application: **29.10.2025**
(21) Application number: 25153265.1
(22) Date of filing: 22.01.2025
(51) Int. Cl.: H04N 21/44, G06T 3/40, G06V 40/16, H04N 21/4402, H04N 21/4728

(54) **IMAGE DISPLAY APPARATUS**

(30) Priority: 22.04.2024 KR 20240053397
(71) Applicant: LG Electronics Inc., Yeongdeungpo-gu Seoul 07336 (KR)
(72) Inventor: CHOI, Woojin, 06772 Seoul (KR); KANG, Subin, 06772 Seoul (KR); RHEE, Kwangjin, 06772 Seoul (KR)
(74) Representative: Vossius & Partner Patentanwälte Rechtsanwälte mbB

(57) **Abstract**

An image display apparatus is disclosed. According to an embodiment of the present disclosure, an image display apparatus comprises a display; and a signal processing device configured to receive a first image of a first aspect ratio, extract a first area including an upper body corresponding to a part of a body in the first image, and display a second image of a second aspect ratio centered on the first area on the display in an image display mode. Accordingly, a person-centered image may be displayed in the image display mode.

## Description

### BACKGROUND

### 1. Field

The present disclosure relates to an image display apparatus, and more particularly, to an image display apparatus capable of displaying a person-centered image in an image display mode.

### 2. Description of the Related Art

An image display apparatus is an apparatus that displays an image through a display.

The image display apparatus can display an image stored therein or an image received from the outside.

At this time, when a resolution or an aspect ratio of the received image does not match an aspect ratio of the display in the image display apparatus, signal processing such as edition is required.

Meanwhile, in a state in which a person is included in the received image, when the aspect ratio of the received image does not match the aspect ratio of the display in the image display apparatus, there is a problem in that a background area is emphasized or an outer area is black-processed due to an edition error.

### SUMMARY

An object of the present disclosure is to provide an image display apparatus capable of displaying a person-centered image in an image display mode.

Another object of the present disclosure is to provide an image display apparatus capable of displaying an upper body-centered image of the body in the image display mode.

In accordance with an embodiment of the present disclosure, an image display apparatus comprises a display; and a signal processing device configured to receive a first image of a first aspect ratio, extract a first area including an upper body corresponding to a part of a body in the first image, and display a second image of a second aspect ratio centered on the first area on the display in an image display mode.

Meanwhile, the signal processing apparatus may be configured to extract coordinates for each body part in the first image, extract a first area corresponding to an upper body among a plurality of coordinates for each body part, and output the second image of the second aspect ratio based on a center of the first area and a center of the second area corresponding to the second aspect ratio.

Meanwhile, in response to a plurality of bodies being included in the first image, the signal processing apparatus may be configured to extract the first area including the upper body corresponding to each of the plurality of bodies, and display the second image of the second aspect ratio centered on the first area.

Meanwhile, in response to a size of the first area being less than a size of the second area corresponding to the second aspect ratio, the signal processing apparatus may be configured to output the second image of the second aspect ratio based on the second area including the first area.

Meanwhile, in response to a plurality of bodies being included in the first image, the signal processing apparatus may be configured to extract the first area including some upper bodies among the plurality of bodies, and a second area including some other upper bodies among the plurality of bodies, and select the first area closer to the center between the first area and the second area.

Meanwhile, the signal processing device may be configured to display a second image of a second aspect ratio centered on the selected first area on the display.

Meanwhile, the signal processing device may be configured to extract the first area including the upper body corresponding to each of the plurality of bodies, and display a second image of a second aspect ratio including the extracted first area and a surrounding area of the extracted first area on the display, and the surrounding area of the first area may be a part of the first area or an area in which the part of the first area is inverted.

Meanwhile, in response to a plurality of bodies being included in the first image, the signal processing device may be configured to extract the first area including the upper body corresponding to each of the plurality of bodies, and perform blur processing of the surrounding area of the first area in the second image based on the first area in response to an aspect ratio of the extracted first area being different from the second aspect ratio.

Meanwhile, the signal processing device may be configured to display an image including the first area in the first aspect ratio in the image display mode, and in response to the display corresponding to the second aspect ratio, display the second image of the second aspect ratio centered on the first area.

Meanwhile, in response to the display corresponding to the first aspect ratio, the signal processing device may be configured to display an image in which the first area is more enlarged than the first image in the image display mode.

Meanwhile, the signal processing device may be configured to extract a plurality of areas including the upper body corresponding to a part of a body in the first image, and extract the first area including the plurality of areas in response to the plurality of areas being adjacent to each other.

Meanwhile, the signal processing device may be configured to extract a plurality of areas including the upper body corresponding to a part of a body in the first image, and extract an area closest to a center among the plurality of areas as the first area in response to the plurality of areas being spaced apart from each other.

Meanwhile, the signal processing device may be configured to extract a plurality of areas including the upper body corresponding to a part of a body in the first image, and extract an area having the greatest size among the plurality of areas as the first area.

Meanwhile, the signal processing device may be configured to extract a plurality of areas including the upper body corresponding to a part of a body in the first image, and extract the remaining area other than an area having a size less than a reference value among the plurality of areas as the first area.

Meanwhile, the signal processing device may be configured to display the second image of the second aspect ratio centered on the first area on the display in response to an aspect ratio of the display is switched to from the first aspect ratio to the second aspect ratio by rotating the display.

Meanwhile, the signal processing device may be configured to display the image including the first area on the display in response to an aspect ratio of the display being switched to from the second aspect ratio to the first aspect ratio by rotating the display.

Meanwhile, the image display apparatus may further include an interface configured to receive the first image from a mobile terminal.

In accordance with another embodiment of the present disclosure, an image display apparatus comprises: a display; and a signal processing device configured to receive a first image of a first aspect ratio, extract coordinates for each body part in the first image, extract a first area corresponding to an upper body among a plurality of coordinates for each body part, and output the second image of the second aspect ratio based on a center of the first area and a center of the second area corresponding to the second aspect ratio.

In accordance with yet another embodiment of the present disclosure, an image display apparatus includes a display; and a signal processing device configured to receive a first image of a first aspect ratio, extract a first area corresponding to an upper body in a body in the first image, and display a second image of a second aspect ratio centered on the first area on the display.

### BRIEF DESCRIPTION OF THE DRAWINGS

FIG. 1 is a diagram showing an image display apparatus according to an embodiment of the present disclosure;
FIG. 2 is an example of an internal block diagram of the image display apparatus;
FIG. 3 is an example of an internal block diagram of a signal processing device of FIG. 2;
FIG. 4A is a diagram showing a method of controlling a remote controller of FIG. 2;
FIG. 4b is an internal block diagram of the remote control device of FIG. 2;
FIGS. 5A to 7D are diagrams illustrating an image display mode of the image display apparatus according to the present disclosure;
FIG. 8A is a flowchart illustrating an operation method of the image display apparatus according to an embodiment of the present disclosure;
FIG. 8B is a flowchart illustrating an operation method of the image display apparatus according to another embodiment of the present disclosure; and
FIGS. 9A to 15C are diagrams referred to in the description of FIG. 8A or 8B.

### DETAILED DESCRIPTION OF THE PREFERRED EMBODIMENTS

Hereinafter, the present disclosure will be described in detail with reference to the accompanying drawings.

Regarding constituent elements used in the following description, suffixes "module" and "unit" are given only in consideration of ease in the preparation of the specification, and do not have or serve as different meanings. Accordingly, the suffixes "module" and "unit" may be used interchangeably.

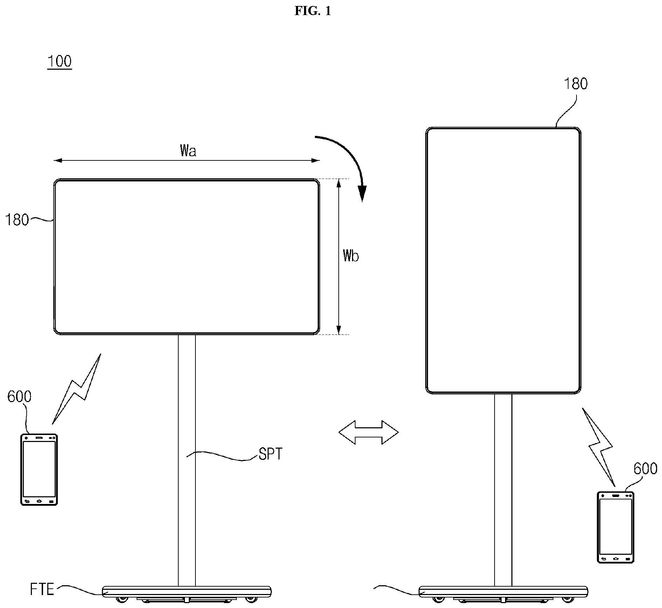

FIG. 1 is a diagram showing an image display apparatus according to an embodiment of the present disclosure.

Referring to FIG. 1, an image display apparatus 100 according to an embodiment of the present disclosure comprises a display 180.

Meanwhile, the image display apparatus 100 may further include a base FTE, and a support frame SPT supporting between the base FTE and the display 180.

Meanwhile, the image display apparatus 100 may be a movable image display apparatus.

For example, at least one wheel is disposed below the base FTE to operate when the image display apparatus 100 moves.

Meanwhile, the display 180 in the image display apparatus 100 according to an embodiment of the present disclosure may be rotatable.

For example, the display 180 in the image display apparatus 100 rotates in a horizontal mode in which an aspect ratio is Wa:Wb, which may be switched to a vertical mode in which the aspect ratio is Wb:Wa.

As another example, the display 180 in the image display apparatus 100 rotates in the vertical mode in which the aspect ratio is Wb:Wa, which may be switched to the horizontal mode in which the aspect ratio is Wa:Wb.

Meanwhile, the image display apparatus 100 according to an embodiment of the present disclosure may be wiredly connected or wirelessly connected to a peripheral electronic device such as a mobile terminal 600, etc.

For example, the image display apparatus 100 according to an embodiment of the present disclosure may receive an image from the mobile terminal 600, etc.

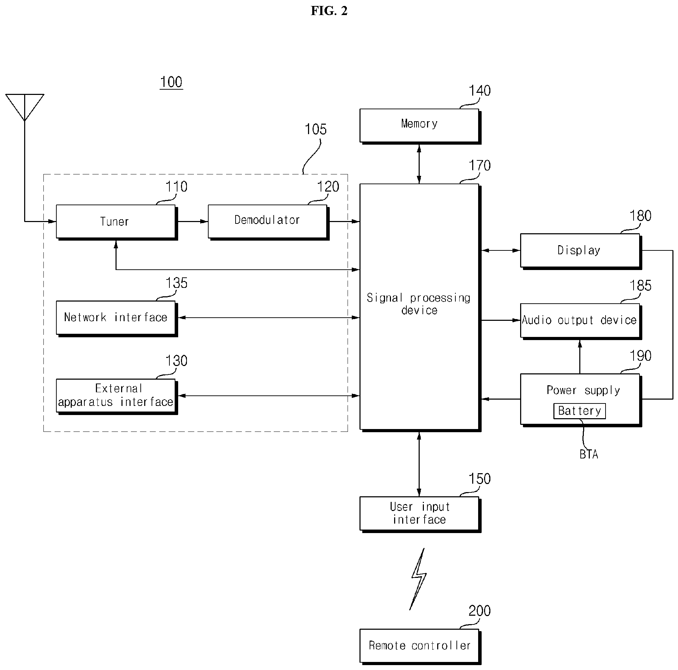

Meanwhile, the image display apparatus 100 according to an embodiment of the present disclosure comprises a battery BTA of FIG. 2.

Meanwhile, a power supply 190 of FIG. 2 in the image display apparatus 100 supplies charging current to the battery BTA to charge the battery BTA upon a charging mode of the battery BTA.

Meanwhile, the image display apparatus 100 of FIG. 1 may be a TV, a monitor, etc.

FIG. 2 is an example of an internal block diagram of the image display apparatus of FIG. 1.

Referring to FIG. 2, the image display apparatus 100 according to an embodiment of the present disclosure comprises an image receiver 105, an external apparatus interface 130, a memory 140, a user input interface 150, a sensor device (not shown), a signal processing device 170, a display 180, and an audio output device 185.

The image receiver 105 may include a tuner 110, a demodulator 120, a network interface 135, and an external apparatus interface 130.

Meanwhile, unlike the figure, the image receiver 105 may include only the tuner 110, the demodulator 120, and the external apparatus interface 130. That is, the network interface 135 may not be included.

The tuner 110 selects an RF broadcast signal corresponding to a channel selected by a user or all pre-stored channels among radio frequency (RF) broadcast signals received through an antenna (not shown). In addition, the selected RF broadcast signal is converted into an intermediate frequency signal, a baseband image, or an audio signal.

For example, the tuner 110 converts the selected RF broadcasting signal into a digital IF signal (DIF) when the selected RF broadcasting signal is a digital broadcasting signal, and converts the selected RF broadcasting signal into an analog baseband image or voice signal (CVBS/SIF) when the selected RF broadcasting signal is an analog broadcasting signal. That is, the tuner 110 may process the digital broadcasting signal or the analog broadcasting signal. The analog baseband image or voice signal outputted from the tuner 110 may be directly inputted into the signal processing device 170.

Meanwhile, the tuner 110 may include a plurality of tuners for receiving broadcast signals of a plurality of channels. Alternatively, a single tuner that simultaneously receives broadcast signals of a plurality of channels is also available.

The demodulator 120 receives the converted digital IF signal DIF from the tuner 110 and performs a demodulation operation.

The demodulator 120 may be configured to perform demodulation and channel decoding and then output a stream signal TS. At this time, the stream signal may be a multiplexed signal of an image signal, an audio signal, or a data signal.

The stream signal output from the demodulator 120 may be input to the signal processing device 170. The signal processing device 170 performs demultiplexing, image/audio signal processing, and the like, and then outputs an image to the display 180 and output audio to the audio output device 185.

The external apparatus interface 130 may transmit or receive data with a connected external apparatus (not shown), e.g., a set-top box 50. To this end, the external apparatus interface 130 may include an A/V input and output device (not shown).

The external apparatus interface 130 may be connected in wired or wirelessly to an external apparatus, such as a digital versatile disk (DVD), a Blu ray, a game equipment, a camera, a camcorder, a computer (note book), and a set-top box, and may be configured to perform an input/output operation with an external apparatus.

The A/V input and output device may receive image and audio signals from an external apparatus. Meanwhile, a wireless transceiver (not shown) may be configured to perform short-range wireless communication with other electronic apparatus.

Through the wireless transceiver (not shown), the external apparatus interface 130 may exchange data with an adjacent mobile terminal 600. In particular, in a mirroring mode, the external apparatus interface 130 may receive device information, executed application information, application image, and the like from the mobile terminal 600.

The network interface 135 provides an interface for connecting the image display apparatus 100 to a wired/wireless network including the Internet network. For example, the network interface 135 may receive, via the network, content or data provided by the Internet, a content provider, or a network operator.

Meanwhile, the network interface 135 may include a wireless transceiver (not shown).

The memory 140 may store a program for each signal processing and control in the signal processing device 170, and may store signal-processed image, audio, or data signal.

In addition, the memory 140 may serve to temporarily store image, audio, or data signal input to the external apparatus interface 130. In addition, the memory 140 may store information on a certain broadcast channel through a channel memory function, such as a channel map.

Although FIG. 2 illustrates that the memory is provided separately from the signal processing device 170, the scope of the present disclosure is not limited thereto. The memory 140 may be included in the signal processing device 170.

The user input interface 150 transmits a signal input by the user to the signal processing device 170 or transmits a signal from the signal processing device 170 to the user.

For example, it may transmit/receive a user input signal, such as power on/off, channel selection, screen setting, etc., from a remote controller 200, may transfer a user input signal input from a local key (not shown), such as a power key, a channel key, a volume key, a set value, etc., to the signal processing device 170, may transfer a user input signal input from a sensor device (not shown) that senses a user's gesture to the signal processing device 170, or may transmit a signal from the signal processing device 170 to the sensor device (not shown).

The signal processing device 170 may demultiplex the input stream through the tuner 110, the demodulator 120, the network interface 135, or the external apparatus interface 130, or process the demultiplexed signals to generate and output a signal for image or audio output.

For example, the signal processing device 170 receives a broadcast signal received by the image receiver 105 or an HDMI signal, and perform signal processing based on the received broadcast signal or the HDMI signal to thereby output a processed image signal.

The image signal processed by the signal processing device 170 is input to the display 180, and may be displayed as an image corresponding to the image signal. In addition, the image signal processed by the signal processing device 170 may be input to the external output apparatus through the external apparatus interface 130.

The audio signal processed by the signal processing device 170 may be output to the audio output device 185 as an audio signal. In addition, audio signal processed by the signal processing device 170 may be input to the external output apparatus through the external apparatus interface 130.

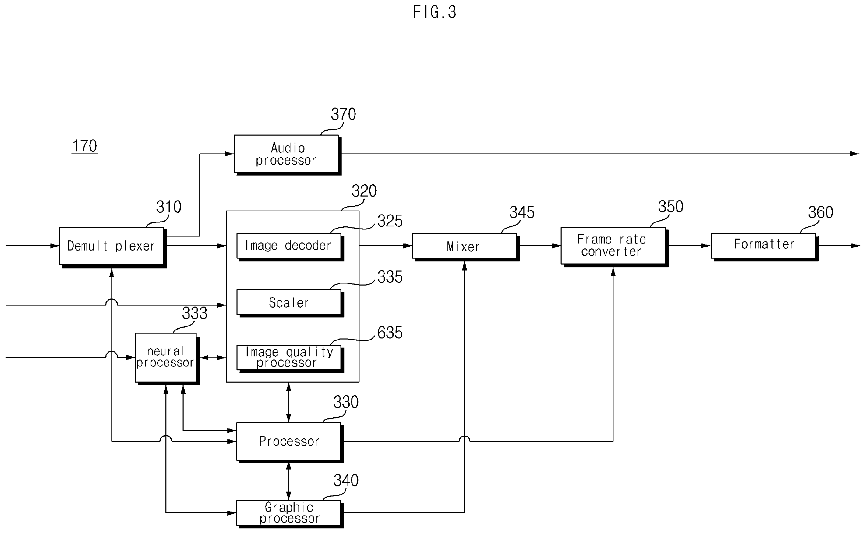

Although not shown in FIG. 2, the signal processing device 170 may include a demultiplexer, an image processor, and the like. That is, the signal processing device 170 may be configured to perform a variety of signal processing and thus it may be implemented in the form of a system on chip (SOC). This will be described later with reference to FIG. 3.

In addition, the signal processing device 170 may control the overall operation of the image display apparatus 100. For example, the signal processing device 170 may control the tuner 110 to control the tuning of the RF broadcast corresponding to the channel selected by the user or the previously stored channel.

In addition, the signal processing device 170 may control the image display apparatus 100 according to a user command input through the user input interface 150 or an internal program.

Meanwhile, the signal processing device 170 may control the display 180 to display an image. At this time, the image displayed on the display 180 may be a still image or a moving image, and may be a 2D image or a 3D image.

Meanwhile, the signal processing device 170 may display a certain object in an image displayed on the display 180. For example, the object may be at least one of a connected web screen (newspaper, magazine, etc.), an electronic program guide (EPG), various menus, a widget, an icon, a still image, a moving image, and a text.

Meanwhile, the signal processing device 170 may recognize the position of the user based on the image photographed by a photographing device (not shown). For example, the distance (z-axis coordinate) between a user and the image display apparatus 100 may be determined. In addition, the x-axis coordinate and the y-axis coordinate in the display 180 corresponding to a user position may be determined.

The display 180 generates a driving signal by converting an image signal, a data signal, an OSD signal, a control signal processed by the signal processing device 170, an image signal, a data signal, a control signal, and the like received from the external apparatus interface 130.

Meanwhile, the display 180 may be configured as a touch screen and used as an input device in addition to an output device.

The audio output device 185 receives a signal processed by the signal processing device 170 and output it as an audio.

The photographing device (not shown) photographs a user. The photographing device (not shown) may be implemented by a single camera, but the present disclosure is not limited thereto and may be implemented by a plurality of cameras. Image information photographed by the photographing device (not shown) may be input to the signal processing device 170.

The signal processing device 170 may sense a gesture of the user based on each of the images photographed by the photographing device (not shown), the signals detected from the sensor device (not shown), or a combination thereof.

The power supply 190 supplies corresponding power to the image display apparatus 100.

Particularly, the power may be supplied to a signal processing device 170 which may be implemented in the form of a system on chip (SOC), a display 180 for displaying an image, and an audio output device 185 for outputting an audio.

Specifically, the power supply 190 may include a converter to convert the level of the input voltage.

For example, the power supply 190 may include an ac/dc converter and a dc/dc converter when the input voltage is an alternating current voltage.

As another example, the power supply 190 may include the dc/dc converter when the input voltage is a direct current voltage.

Meanwhile, the power supply 190 includes the battery BTA.

The remote controller 200 transmits the user input to the user input interface 150. To this end, the remote controller 200 may use Bluetooth, a radio frequency (RF) communication, an infrared (IR) communication, an Ultra Wideband (UWB), ZigBee, or the like. In addition, the remote controller 200 may receive the image, audio, or data signal output from the user input interface 150, and display it on the remote controller 200 or output it as an audio.

Meanwhile, the image display apparatus 100 may be a fixed or mobile digital broadcast receiver capable of receiving digital broadcast.

Meanwhile, a block diagram of the image display apparatus 100 shown in FIG. 2 is a block diagram for an embodiment of the present disclosure. Each component of the block diagram may be integrated, added, or omitted according to a specification of the image display apparatus 100 actually implemented. That is, two or more components may be combined into a single component as needed, or a single component may be split into two or more components. The function performed in each block is described for the purpose of illustrating embodiments of the present disclosure, and specific operation and apparatus do not limit the scope of the present disclosure.

FIG. 3 is an example of an internal block diagram of the signal processing device in FIG. 2.

Referring to the figure, the signal processing device 170 according to an embodiment of the present disclosure may include a demultiplexer 310, an image processor 320, a processor 330, and an audio processor 370. In addition, the signal processing device 170 may further include and a data processor (not shown).

The demultiplexer 310 demultiplexes the input stream. For example, when an MPEG-2 TS is input, it may be demultiplexed into image, audio, and data signal, respectively. Here, the stream signal input to the demultiplexer 310 may be a stream signal output from the tuner 110, the demodulator 120, or the external apparatus interface 130.

The image processor 320 may be configured to perform signal processing on an input image. For example, the image processor 320 may be configured to perform image processing on an image signal demultiplexed by the demultiplexer 310.

To this end, the image processor 320 may include an image decoder 325, a scaler 335, an image quality processor 635, an image encoder (not shown), a graphic processor 340, a frame rate converter 350, a formatter 360, etc.

The image decoder 325 decodes a demultiplexed image signal, and the scaler 335 performs scaling so that the resolution of the decoded image signal may be output from the display 180.

The image decoder 325 may include a decoder of various standards. For example, a 3D image decoder for MPEG-2, H.264 decoder, a color image, and a depth image, and a decoder for a multiple view image may be provided.

The scaler 335 may scale an input image signal decoded by the image decoder 325 or the like.

For example, if the size or resolution of an input image signal is small, the scaler 335 may upscale the input image signal, and, if the size or resolution of the input image signal is great, the scaler 335 may downscale the input image signal.

The image quality processor 635 may be configured to perform image quality processing on an input image signal decoded by the image decoder 325 or the like.

For example, the image quality processor 625 may be configured to perform noise reduction processing on an input image signal, extend a resolution of high gray level of the input image signal, perform image resolution enhancement, perform high dynamic range (HDR)-based signal processing, change a frame rate, perform image quality processing suitable for properties of a panel, especially an OLED panel, etc.

The graphic processor 340 generates an OSD signal according to a user input or by itself. For example, based on a user input signal, the graphic processor 340 may generate a signal for displaying various information as a graphic or a text on the screen of the display 180. The generated OSD signal may include various data, such as a user interface screen of the image display apparatus 100, various menu screens, a widget, and an icon. In addition, the generated OSD signal may include a 2D object or a 3D object.

In addition, the graphic processor 340 may generate a pointer that may be displayed on the display, based on a pointing signal input from the remote controller 200. In particular, such a pointer may be generated by a pointing signal processing device, and the graphic processor 340 may include such a pointing signal processing device (not shown). Obviously, the pointing signal processing device (not shown) may be provided separately from the graphic processor 340.

The frame rate converter (FRC) 350 may convert a frame rate of an input image. Meanwhile, the frame rate converter 350 may be configured to output the input image without converting the frame rate.

Meanwhile, the formatter 360 may change a format of an input image signal into a format suitable for displaying the image signal on a display and output the image signal in the changed format.

In particular, the formatter 360 may change a format of an image signal to correspond to a display panel. Meanwhile, the formatter 360 may also change the format of the video signal.

The processor 330 may control overall operations of the image display apparatus 100 or the signal processing device 170.

For example, the processor 330 may control the tuner 110 to control the tuning of an RF broadcast corresponding to a channel selected by a user or a previously stored channel.

In addition, the processor 330 may control the image display apparatus 100 according to a user command input through the user input interface 150 or an internal program.

In addition, the processor 330 may transmit data to the network interface 135 or to the external apparatus interface 130.

In addition, the processor 330 may control the demultiplexer 310, the image processor 320, and the like in the signal processing device 170.

Meanwhile, the audio processor 370 in the signal processing device 170 may be configured to perform the audio processing of the demultiplexed audio signal. To this end, the audio processor 370 may include various decoders.

In addition, the audio processor 370 in the signal processing device 170 may process a base, a treble, a volume control, and the like.

The data processor (not shown) in the signal processing device 170 may be configured to perform data processing of the demultiplexed data signal. For example, when the demultiplexed data signal is a coded data signal, it may be decoded. The encoded data signal may be electronic program guide information including broadcast information, such as a start time and an end time of a broadcast program broadcasted on each channel.

Meanwhile, a block diagram of the signal processing device 170 shown in FIG. 3 is a block diagram for an embodiment of the present disclosure. Each component of the block diagram may be integrated, added, or omitted according to a specification of the signal processing device 170 actually implemented.

In particular, the frame rate converter 350 and the formatter 360 may be provided separately in addition to the image processor 320.

Meanwhile, the signal processing device 170 according to an embodiment of the present disclosure may further include a neural network processor 333 for learning processing, etc.

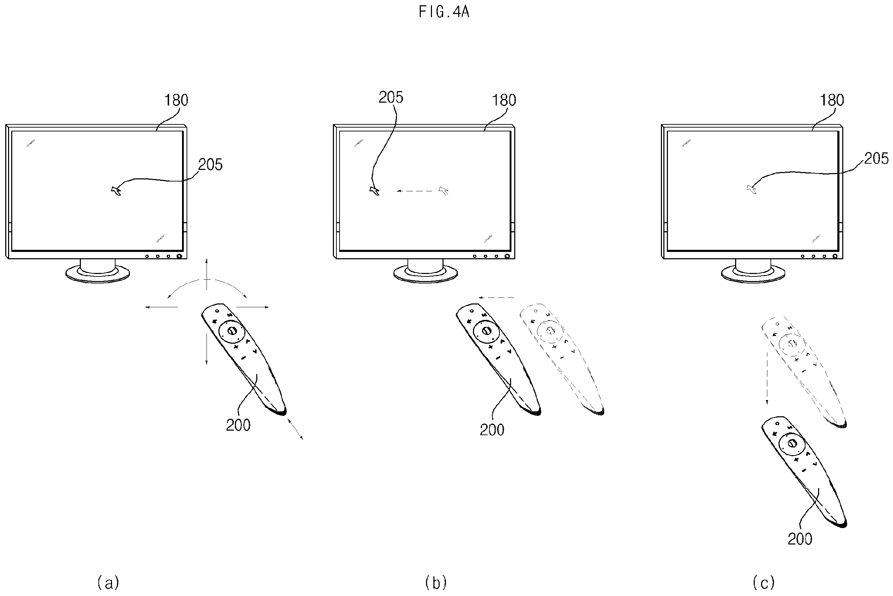

FIG. 4A is a diagram illustrating a control method of a remote controller of FIG. 2.

As shown in FIG. 4A(a), it is illustrated that a pointer 205 corresponding to the remote controller 200 is displayed on the display 180.

The user may move or rotate the remote controller 200 up and down, left and right (FIG. 4A(b)), and back and forth (FIG. 4A(c)). The pointer 205 displayed on the display 180 of the image display apparatus corresponds to the motion of the remote controller 200. Such a remote controller 200 may be referred to as a space remote controller or a 3D pointing apparatus, because the pointer 205 is moved and displayed according to the movement in a 3D space, as shown in the figure.

FIG. 4A(b) illustrates that when the user moves the remote controller 200 to the left, the pointer 205 displayed on the display 180 of the image display apparatus also moves to the left correspondingly.

Information on the motion of the remote controller 200 detected through a sensor of the remote controller 200 is transmitted to the image display apparatus. The image display apparatus may calculate the coordinate of the pointer 205 from the information on the motion of the remote controller 200. The image display apparatus may display the pointer 205 to correspond to the calculated coordinate.

FIG. 4A(c) illustrates a case where the user moves the remote controller 200 away from the display 180, while pressing a specific button of the remote controller 200. Thus, a selection area within the display 180 corresponding to the pointer 205 may be zoomed in so that it may be displayed to be enlarged. Meanwhile, when the user moves the remote controller 200 close to the display 180, the selection area within the display 180 corresponding to the pointer 205 may be zoomed out so that it may be displayed to be reduced. Meanwhile, when the remote controller 200 moves away from the display 180, the selection area may be zoomed out, and when the remote controller 200 approaches the display 180, the selection area may be zoomed in.

Meanwhile, when the specific button of the remote controller 200 is pressed, it is possible to exclude the recognition of vertical and lateral movement. That is, when the remote controller 200 moves away from or approaches the display 180, the up, down, left, and right movements are not recognized, and only the forward and backward movements are recognized. Only the pointer 205 is moved according to the up, down, left, and right movements of the remote controller 200 in a state where the specific button of the remote controller 200 is not pressed.

Meanwhile, the moving speed or the moving direction of the pointer 205 may correspond to the moving speed or the moving direction of the remote controller 200.

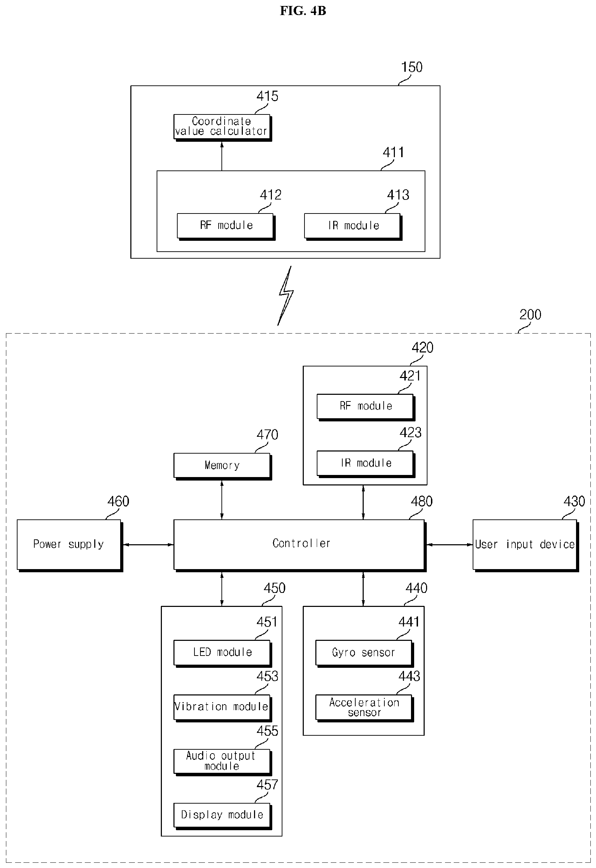

FIG. 4B is an internal block diagram of the remote controller of FIG. 2.

Referring to the figure, the remote controller 200 includes a wireless transceiver 425, a user input device 435, a sensor device 440, an output device 450, a power supply 460, a memory 470, and a controller 480.

The wireless transceiver 425 transmits/receives a signal to/from any one of the image display apparatuses according to the embodiments of the present disclosure described above. Among the image display apparatuses according to the embodiments of the present disclosure, one image display apparatus 100 will be described as an example.

In the present embodiment, the remote controller 200 may include an RF module 421 for transmitting and receiving signals to and from the image display apparatus 100 according to a RF communication standard. In addition, the remote controller 200 may include an IR module 423 for transmitting and receiving signals to and from the image display apparatus 100 according to a IR communication standard.

In the present embodiment, the remote controller 200 transmits a signal containing information on the motion of the remote controller 200 to the image display apparatus 100 through the RF module 421.

In addition, the remote controller 200 may receive the signal transmitted by the image display apparatus 100 through the RF module 421. In addition, if necessary, the remote controller 200 may transmit a command related to power on/off, channel change, volume change, and the like to the image display apparatus 100 through the IR module 423.

The user input device 435 may be implemented by a keypad, a button, a touch pad, a touch screen, or the like. The user may operate the user input device 435 to input a command related to the image display apparatus 100 to the remote controller 200. When the user input device 435 includes a hard key button, the user may input a command related to the image display apparatus 100 to the remote controller 200 through a push operation of the hard key button. When the user input device 435 includes a touch screen, the user may touch a soft key of the touch screen to input the command related to the image display apparatus 100 to the remote controller 200. In addition, the user input device 435 may include various types of input means, such as a scroll key, a jog key, etc., which may be operated by the user, and the present disclosure does not limit the scope of the present disclosure.

The sensor device 440 may include a gyro sensor 441 or an acceleration sensor 443. The gyro sensor 441 may sense information regarding the motion of the remote controller 200.

For example, the gyro sensor 441 may sense information on the operation of the remote controller 200 based on the x, y, and z axes. The acceleration sensor 443 may sense information on the moving speed of the remote controller 200. Meanwhile, a distance measuring sensor may be further provided, and thus, the distance to the display 180 may be sensed.

The output device 450 may be configured to output an image or an audio signal corresponding to the operation of the user input device 435 or a signal transmitted from the image display apparatus 100. Through the output device 450, the user may recognize whether the user input device 435 is operated or whether the image display apparatus 100 is controlled.

For example, the output device 450 may include an LED module 451 that is turned on when the user input device 435 is operated or a signal is transmitted/received to/from the image display apparatus 100 through the wireless transceiver 425, a vibration module 453 for generating a vibration, an audio output module 455 for outputting an audio, or a display module 457 for outputting an image.

The power supply 460 supplies power to the remote controller 200. When the remote controller 200 is not moved for a certain time, the power supply 460 may stop the supply of power to reduce a power waste. The power supply 460 may resume power supply when a certain key provided in the remote controller 200 is operated.

The memory 470 may store various types of programs, application data, and the like necessary for the control or operation of the remote controller 200. If the remote controller 200 wirelessly transmits and receives a signal to/from the image display apparatus 100 through the RF module 421, the remote controller 200 and the image display apparatus 100 transmit and receive a signal through a certain frequency band. The controller 480 of the remote controller 200 may store information regarding a frequency band or the like for wirelessly transmitting and receiving a signal to/from the image display apparatus 100 paired with the remote controller 200 in the memory 470 and may refer to the stored information.

The controller 480 controls various matters related to the control of the remote controller 200. The controller 480 may transmit a signal corresponding to a certain key operation of the user input device 435 or a signal corresponding to the motion of the remote controller 200 sensed by the sensor device 440 to the image display apparatus 100 through the wireless transceiver 425.

The user input interface 150 of the image display apparatus 100 includes a wireless transceiver 151 that may wirelessly transmit and receive a signal to and from the remote controller 200 and a coordinate value calculator 415 that may calculate the coordinate value of a pointer corresponding to the operation of the remote controller 200.

The user input interface 150 may wirelessly transmit and receive a signal to and from the remote controller 200 through the RF module 412. In addition, the user input interface 150 may receive a signal transmitted by the remote controller 200 through the IR module 413 according to a IR communication standard.

The coordinate value calculator 415 may correct a hand shake or an error from a signal corresponding to the operation of the remote controller 200 received through the wireless transceiver 151 and calculate the coordinate value (x, y) of the pointer 205 to be displayed on the display 180.

The transmission signal of the remote controller 200 inputted to the image display apparatus 100 through the user input interface 150 is transmitted to the controller 180 of the image display apparatus 100. The controller 180 may determine the information on the operation of the remote controller 200 and the key operation from the signal transmitted from the remote controller 200, and, correspondingly, control the image display apparatus 100.

For another example, the remote controller 200 may calculate the pointer coordinate value corresponding to the operation and output it to the user input interface 150 of the image display apparatus 100. In this case, the user input interface 150 of the image display apparatus 100 may transmit information on the received pointer coordinate value to the controller 180 without a separate correction process of hand shake or error.

For another example, unlike the figure, the coordinate value calculator 415 may be provided in the signal processing device 170, not in the user input interface 150.

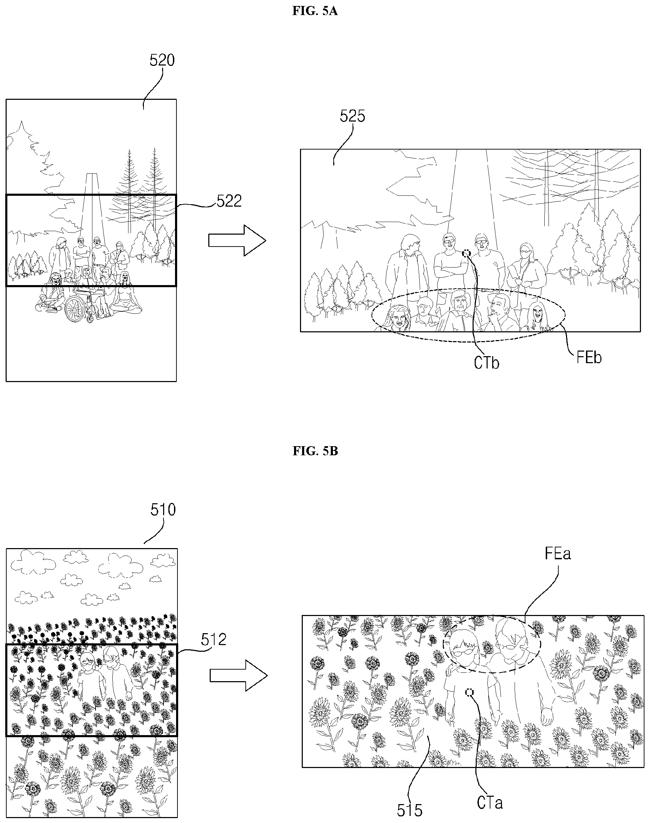

FIGS. 5A to 7D are diagrams illustrating an image display mode of the image display apparatus according to the present disclosure.

FIG. 5A illustrates an example of the image display mode of the image display apparatus according to the present disclosure.

Referring to the drawing, when an aspect ratio which is a width to length ratio of an input first image 512 is 9:16, the image display apparatus 100 according to the present disclosure performs image transform to 16:9 which is an aspect ratio of a display to display a transformed second image 515.

As in the drawing, the image display apparatus 100 according to the present disclosure extracts an area 512 of 16:9, and enlarges the extracted area 512 in the first image 512 to display the second image 515.

Specifically, the image display apparatus 100 according to the present disclosure may be configured to extract a central area of the first image 512 when extracting the area 512 of 16:9.

Accordingly, there is a problem in that a face area FEa in the second image 515 is biased to an upper portion significantly spaced apart from a central area CTa.

FIG. 5B illustrates another example of the image display mode of the image display apparatus according to the present disclosure.

Referring to the drawing, when an aspect ratio which is a width to length ratio of an input first image 522 is 12:16, the image display apparatus 100 according to the present disclosure performs image transform to 16:9 which is an aspect ratio of a display to display a transformed second image 525.

As in the drawing, the image display apparatus 100 according to the present disclosure extracts an area 522 of 16:9, and enlarges the extracted area 522 in the first image 522 to display the second image 525.

Specifically, the image display apparatus 100 according to the present disclosure may be configured to extract a central area of the first image 522 when extracting the area 522 of 16:9.

Accordingly, there is a problem in that a face area FEb of some of a plurality of persons in the second image 525 deviates from a central area CTb and is biased to a lower portion.

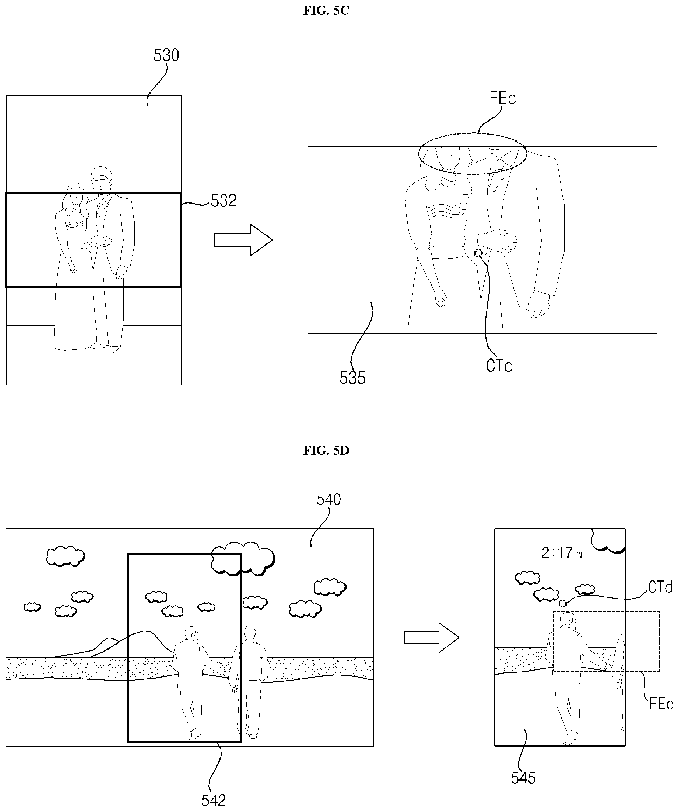

FIG. 5C illustrates yet another example of the image display mode of the image display apparatus according to the present disclosure.

Referring to the drawing, when an aspect ratio which is a width to length ratio of an input first image 532 is 12:16, the image display apparatus 100 according to the present disclosure performs image transform to 16:9 which is an aspect ratio of a display to display a transformed second image 535.

As in the drawing, the image display apparatus 100 according to the present disclosure extracts an area 532 of 16:9, and enlarges the extracted area 522 in the first image 532 to display the second image 535.

Specifically, the image display apparatus 100 according to the present disclosure may be configured to extract a central area of the first image 532 when extracting the area 532 of 16:9.

Accordingly, there is a problem in that a face area FEc among the plurality of persons in the second image 535 deviates from a central area CTc and is biased to the upper portion.

FIG. 5D illustrates still yet another example of the image display mode of the image display apparatus according to the present disclosure.

Referring to the drawing, when an aspect ratio which is a width to length ratio of an input first image 542 is 16:9, the image display apparatus 100 according to the present disclosure performs image transform to 9:16 which is an aspect ratio of a vertical mode of the display to display a transformed second image 545.

As in the drawing, the image display apparatus 100 according to the present disclosure extracts an area 542 of 9:16, and enlarges the extracted area 542 in the first image 542 to display the second image 545.

Specifically, the image display apparatus 100 according to the present disclosure may be configured to extract a central area of the first image 542 when extracting the area 542 of 9: 16.

Accordingly, there is a problem in that a face area FEd of some of the plurality of persons in the second image 545 deviates from a central area CTd and is biased to a right side. That is, there is a problem in that some persons among the plurality of persons in the second image 545 are not displayed.

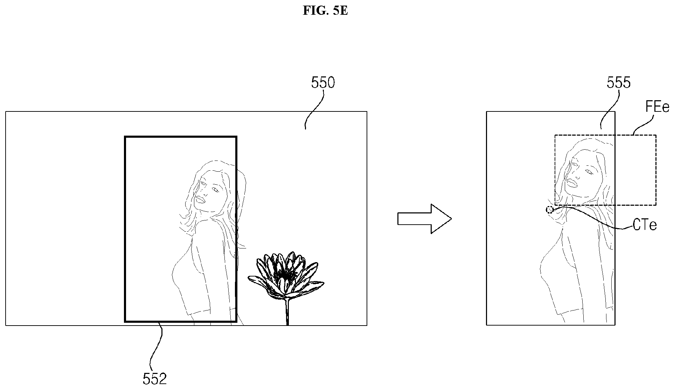

FIG. 5E illustrates further yet another example of the image display mode of the image display apparatus according to the present disclosure.

Referring to the drawing, when an aspect ratio which is the width to length ratio of the input first image 552 is 16:11, the image display apparatus 100 according to the present disclosure performs image transform to 9:16 which is the aspect ratio of the vertical mode of the display to display a transformed second image 555.

As in the drawing, the image display apparatus 100 according to the present disclosure extracts the area 552 of 9:16, and enlarges the extracted area 542 in the first image 552 to display the second image 555.

Specifically, the image display apparatus 100 according to the present disclosure may be configured to extract the central area of the first image 552 when extracting the area 552 of 9: 16.

Accordingly, there is a problem in that a face area FEe of a person in the second image 555 deviates from a central area CTe and is biased to a right side.

As illustrated in FIGS. 5A to 5E, in order to prevent a person image from deviating from the center, and being displayed, the image display apparatus 100 according to the present disclosure may edit the image by using an attention map.

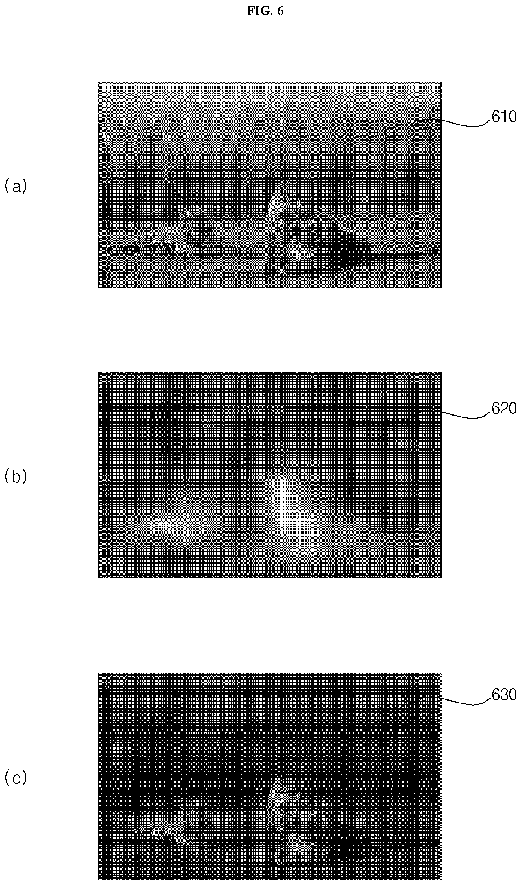

FIG. 6 is a diagram illustrating an attention map based image edition performed by the image display apparatus according to the present disclosure.

Referring to the drawing, the image display apparatus 100 according to the present disclosure may be configured to extract an attention mask 620 from an original image 610, and generate an attention map 630 based on an attention mask 630.

Meanwhile, the attention map 630 may indicate a coordinate or a location of an object having a feature in the image.

In the drawing, it is illustrated that the attention map 630 indicates a coordinate or a location related to an animal object.

Meanwhile, the image display apparatus 100 according to the present disclosure may be configured to extract an attention area of the original image 610 based on the attention map 630, and edit the image based on the extracted area.

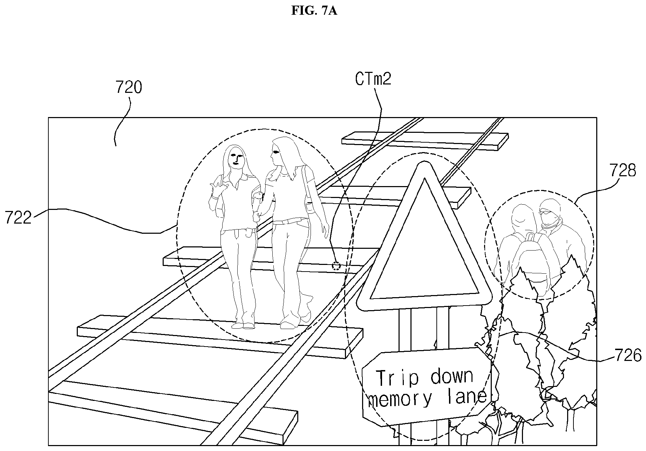

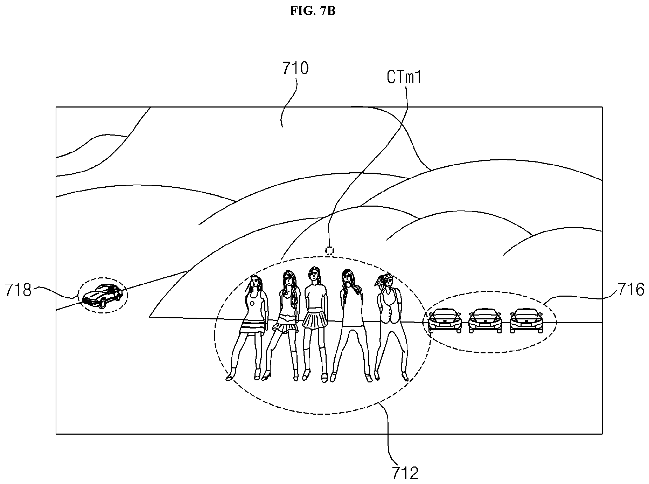

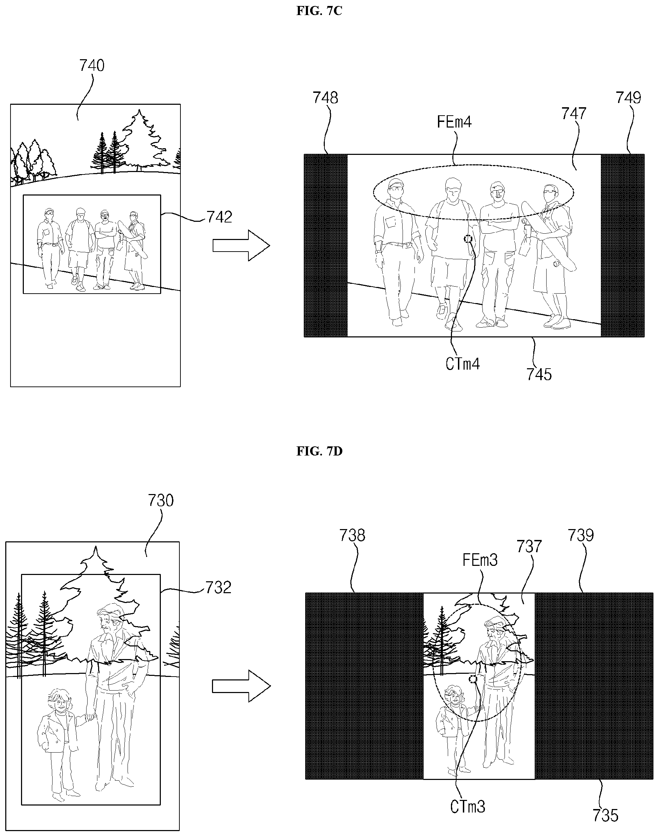

FIGS. 7A and 7B illustrate various examples of attention map based image displaying.

FIG. 7A illustrates an example of the attention map based image performed by the image display apparatus according to the present disclosure.

Referring the drawing, in an attention map based image 710, a plurality of person areas 712, and vehicle areas 716 and 718 around the plurality of person areas 712 may be disposed in front of a mountain which is a background.

Since the plurality of person areas 712 are disposed, and the vehicle areas 716 and 718 are disposed, below a center CTm1 of the image 710, there is a disadvantage in that the plurality of person images 712 are not focused.

That is, the image 710 is edited that both a person object and a vehicle object are included based on the attention map, the center CTm1 of the image 710, and the plurality of person areas 712 are spaced apart from each other, so the plurality of person areas 712 are not focused.

FIG. 7B illustrates another example of the attention map based image performed by the image display apparatus according to the present disclosure.

Referring the drawing, a plurality of person areas 722 may be disposed on a railway in the attention map based image 720, and a surrounding sign area 726 and a surrounding person area 728 may be disposed at the right side of the plurality of person areas 722.

Since the plurality of person areas 720 are disposed at a left side of a center CTm2 of the image 720, and the sign area 726 and the surrounding person area 728 are disposed at one side of the plurality of person areas 722, there is a disadvantage in that the plurality of person images 722 are not focused.

That is, the image 720 is edited that the person object, the sign object, and a railway object are all included based on the attention map, and the center CTm2 of the image 720, and the plurality of person areas 722 are spaced apart from each other, so the plurality of person areas 722 are not focused.

Therefore, the present disclosure a method for supplementing the image edition based on the attention map in FIGS. 7A and 7B.

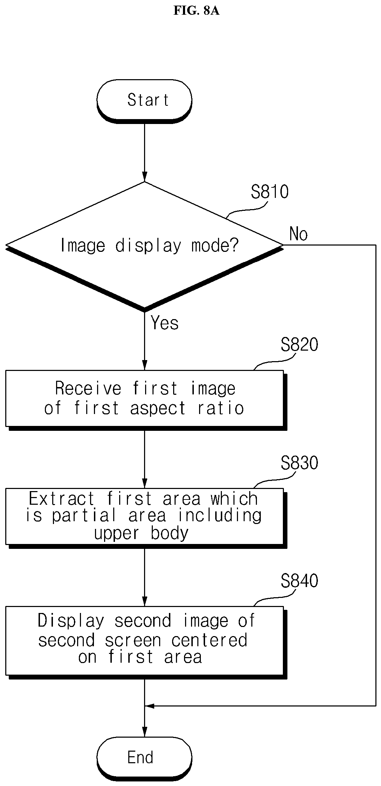

That is, the image display apparatus 100 according to the embodiment of the present disclosure allows the image to be edited and displayed around an area including the upper body corresponding to a part of a body. This is described below with reference to FIG. 8A or below.

FIG. 8A is a flowchart illustrating an operation method of the image display apparatus according to an embodiment of the present disclosure.

Referring to the drawing, the signal processing device 170 in the image display apparatus 100 according to the embodiment of the present disclosure determines whether the image display apparatus 100 is in the image display mode (S810), and receives a first image of a first aspect ratio when the image display apparatus 100 is in the image display mode (S820).

For example, the signal processing device 170 according to the embodiment of the present disclosure may receive the first image of the first aspect ratio from the internal memory 140 when the image display apparatus 100 is in the image display mode.

As another example, the signal processing device 170 according to the embodiment of the present disclosure may wiredly or wirelessly receive the first image of the first aspect ratio from the external apparatus through an external device interface 130 or a network interface 135.

At this time, the external device may be the mobile terminal 600 or a USB type storage device, or a tablet, or a set-top box or a laptop connected by an HDMI.

Next, the signal processing device 170 according to the embodiment of the present disclosure may be configured to extract a first area including an upper body corresponding to a part of a body in the received first image (S830), and controls a second image of a second aspect ratio centered on the first area to be displayed on a display 180 (S840).

For example, the upper body may include the head, the shoulder, and the chest in the body.

Accordingly, in the image display mode, the person-centered image may be displayed in the display 180 having the second aspect ratio. In particular, the upper body-centered image may be displayed in the image display mode.

Meanwhile, when extracting the first area, the signal processing device 170 may be configured to extract a coordinate for each body part in the first image, and may be configured to extract the first area corresponding to the upper body among the plurality of coordinates for each body part.

Meanwhile, when transforming the image after extracting the first area, the signal processing device 170 may be configured to output the second image of the second aspect ratio based on a center of the first area and a center of the second area corresponding to the second aspect ratio.

For example, the signal processing device 170 may be configured to search a location at which a distance from the center of the second area corresponding to the second aspect ratio is minimal while moving the center of the first area, and match the center of the first area and the center of the second area with the corresponding location.

As another example, the signal processing device 170 may be configured to search a location at which a distance from the center of the first area is minimal while moving the center of the second area, and match the center of the first area and the center of the second area with the corresponding location.

Meanwhile, when complementing the matching of the center of the first area and the center of the second area, the signal processing device 170 may be configured to output the second image of the second aspect ratio to which the first area is enlarged by scaling the first area. Accordingly, the upper body-centered image of the body may be displayed in the image display mode.

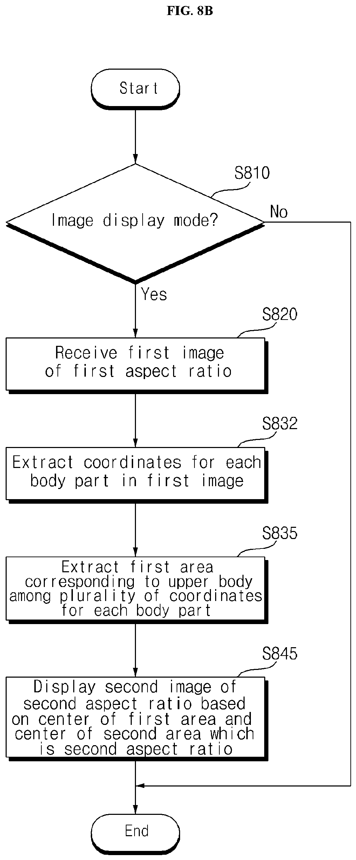

FIG. 8B is a flowchart illustrating an operation method of the image display apparatus according to another embodiment of the present disclosure.

Referring to the drawing, the signal processing device 170 in the image display apparatus 100 according to another embodiment of the present disclosure may be configured to determine whether the image display apparatus 100 is in the image display mode (S810), and receive a first image of a first aspect ratio when the image display apparatus 100 is in the image display mode (S820).

Next, the signal processing device 170 according to another embodiment of the present disclosure may be configured to extract a coordinate for each body part in the received first image (S832), and extract the first area corresponding to the upper body among the plurality of coordinates for each body part (S835).

In addition, when transforming the image after extracting the first area, the signal processing device 170 may be configured to display the second image of the second aspect ratio on the display 180 based on a center of the first area and a center of the second area corresponding to the second aspect ratio (S845).

Accordingly, in the image display mode, the person-centered image may be displayed in the display 180 having the second aspect ratio. In particular, the upper body-centered image of the body may be displayed in the image display mode.

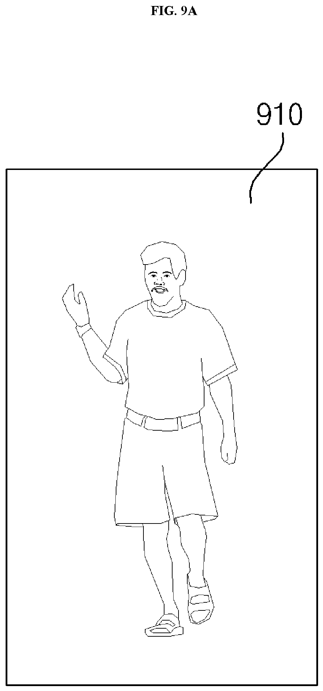

FIGS. 9A to 15C are diagrams referred to in the description of FIG. 8A or 8B.

FIG. 9A illustrates an example of a first image.

Referring to the drawing, a person may be included in the first image 910.

Meanwhile, the signal processing device 170 may be configured to perform training by using a training model such as deep learning with respect to an image including a person.

For example, a neural network processor 333 in the signal processing device 170 may be configured to perform training by using the training model such as the deep learning with respect to the image including the person.

In addition, the signal processing device 170 may be configured to calculate or obtain a body coordinate of the person based on a parameter based on a training result for a person image or a database according to the training result.

For example, an image processor 320 or a processor 320, the processor 330, or the neural network processor 333, or a graphic processor 340 in the signal processing device 170 may be configured to calculate or obtain the body coordinate of the person based on the parameter based on the training result for the person image or the database according to the training result.

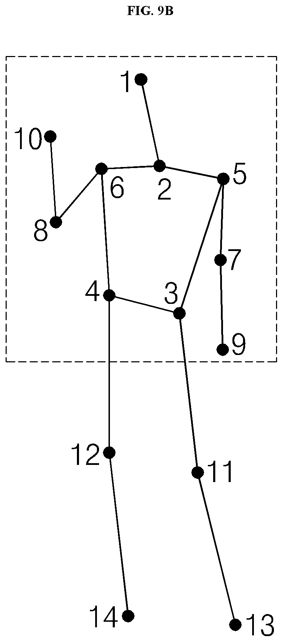

FIG. 9B illustrates an example of body coordinate information for the person in the first image 910.

Referring to the drawing, when the person is included in the first image 910, the signal processing device 170 may be configured to extract the coordinate for each body part of the person based on the parameter based on the training result or the database according to the training result.

In the drawing, it is illustrated that the head of the person is numbered with '1', a neck is numbered with '2', a right shoulder is numbered with '3', a right elbow is numbered with '8', a right hand is numbered with '10', a left shoulder is numbered with '5', a left elbow is numbered with `7', a left hand is numbered with '9', a left pelvis is numbered with '3', a right pelvis is numbered with '4', a right knee is numbered with '12', a right foot is numbered with '14', a left knee is numbered with `11', and a left foot is numbered with '13'.

That is, as in FIG. 9B, the signal processing device 170 may be configured to extract the coordinate for each body part of the person, and number and distinguish the coordinate for each body part of the person.

Meanwhile, the signal processing device 170 may be configured to extract the first area including the upper body among body parts 1 to 14 of FIG. 9B.

For example, the signal processing device 170 may be configured to extract an area including the body parts 1, 2, and 5 to 8 corresponding to the upper body among the body parts 1 to 14 of FIG. 9B as the first area.

As another example, the signal processing device 170 may be configured to extract an area including an area including the body parts 1 to 10 corresponding to the upper body among the body parts 1 to 14 of FIG. 9B as the first area. That is, at this time, the first area may be an upper body area from the head to the pelvis.

According to the scheme of FIG. 9B, the signal processing device 170 may be configured to stably extract the upper body regardless of various postures such as person's sitting, lying, or backing.

Meanwhile, the signal processing device 170 may be configured to also extract an area including the body parts 1 to 12 including the knee among the body parts 1 to 14 of FIG. 9B as the first area. That is, at this time, the first area may be an area from the head to the knee.

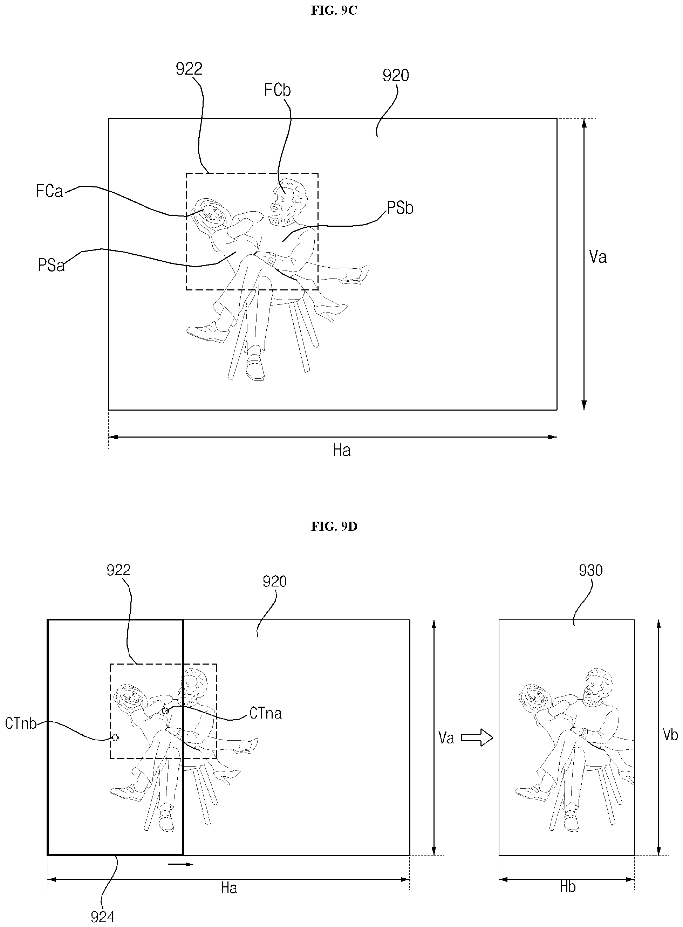

FIG. 9C is a diagram illustrating extraction of an upper body area in an image.

Referring to the drawing, an image 920 of a first aspect ratio may include a plurality of persons. At this time, the first aspect ratio as Ha: Va may be a horizontal mode. For example, the first aspect ratio may be 16:9.

In the drawing, it is illustrated that a first person PSb in the image 920 sits, and a second person PSa lies in the vicinity of the first person PSb.

The signal processing device 170 according to the embodiment of the present disclosure may be configured to extract a plurality of areas including an upper body corresponding to a part of a body in the first image, and extract a first area including the plurality of areas in response to the plurality of areas being adjacent.

That is, in response to a plurality of bodies being included in the first image, the signal processing device 170 according to the embodiment of the present disclosure may be configured to extract an area including the upper body corresponding to each of the plurality of bodies.

For example, the signal processing device 170 according to the embodiment of the present disclosure may be configured to extract an area including an upper body FCb of the first person PSb, and an area including an upper body FCa of the second person PSa.

In addition, the signal processing device 170 may be configured to extract an area including a plurality of areas as a first area 922 when a plurality of areas corresponding to upper bodies of a plurality of bodies are adjacent.

Alternatively, in response to a plurality of bodies being included in the first image, the signal processing device 170 according to the embodiment of the present disclosure may be configured to extract areas corresponding to the upper bodies of the plurality of bodies.

In addition, when a plurality of upper body areas are adjacent, the signal processing device 170 may be configured to extract an area including the plurality of upper body areas as the first area 922.

FIG. 9D is a diagram illustrating that the second image of the second aspect ratio is generated based on the first area extracted in FIG. 9C.

Referring to the drawing, the signal processing device 170 according to the embodiment of the present disclosure may be configured to extract the first area 922 including the upper body corresponding to each of the plurality of bodies, and control to display the second image 930 of the second aspect ratio centered on the first area 922 on the display 180.

At this time, the second aspect ratio as Hb:Vb may be a vertical mode. For example, the second aspect ratio may be 9:16.

Meanwhile, when a size of the first area 922 is less than a size of a second area 924 corresponding to the second aspect ratio, the signal processing device 170 may be configured to output a second image 930 of the second aspect ratio based on the second area including the first area.

For example, when transforming the image after extracting the first area 922, the signal processing device 170 may be configured to output the second image 930 of the second aspect ratio based on a center CTna of the first area 922 and a center CTnb of the second area 924 corresponding to the second aspect ratio.

For example, the signal processing device 170 may be configured to search a location at which a distance between the center CTnb of the second area 924 and the center CTna of the first area 922 is minimal while moving the second area 924, and match the center CTnb of the second area 924 and the center CTna of the first area 922 with the corresponding location.

Meanwhile, after completing the matching of the center CTnb of the second area 924 and the center CTna of the first area 922, the signal processing device 170 may be configured to output the second image 930 of the second aspect ratio to which the first area 922 is enlarged by scaling the first area 922.

Accordingly, the signal processing device 170 may be configured to transform the image of the first aspect ratio which is the horizontal mode to the image of the second aspect ratio of the vertical mode, and transform the image of the second aspect ratio to the person-centered image.

Consequently, the upper body-centered image of the body may be displayed in the image display mode. In particular, as in the drawing, upper body-centered images of a plurality of persons may be displayed.

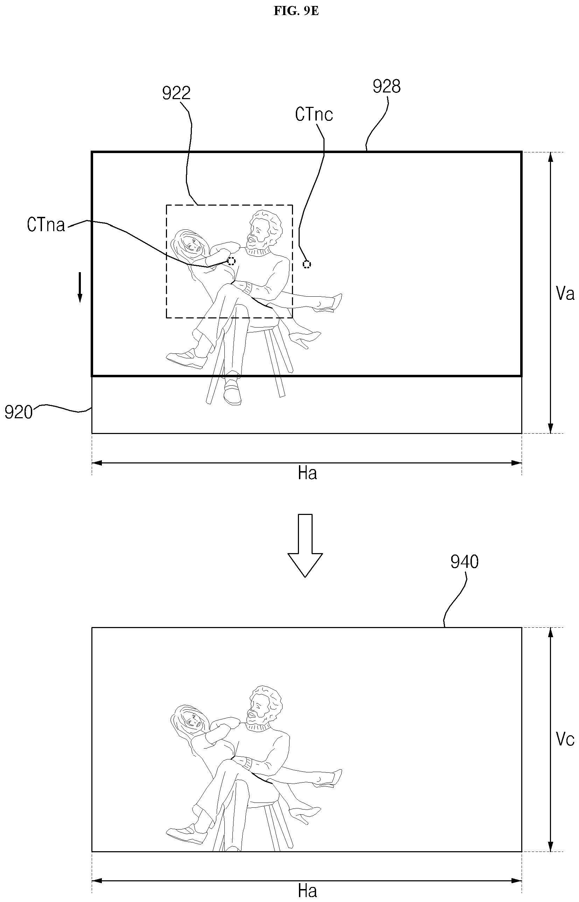

FIG. 9E illustrates that the image of the horizontal mode is transformed to the image of the horizontal mode.

Referring to the drawing, the signal processing device 170 according to the embodiment of the present disclosure may be configured to receive the first image 920 of the first aspect ratio which is the horizontal model, extract the first area 922 including the upper body corresponding to a part of a body in the first image, and display a third image 940 of a third aspect ratio which is the horizontal mode, which includes the first area, on the display 180.

At this time, the first aspect ratio as Ha:Va may be the horizontal mode, and the third aspect ratio as Ha:Vc may be the horizontal mode. For example, the first aspect ratio may be 16:9, and the third aspect ratio may be 16:7.

In particular, the third aspect ratio may have a smaller vertical ratio than the first aspect ratio.

For example, when transforming the image after extracting the first area 922, the signal processing device 170 may be configured to output the third image 940 of the third aspect ratio based on the center CTna of the first area 922 and a center CTnc of the third area 928 corresponding to the third aspect ratio.

For example, the signal processing device 170 may be configured to search a location at which a distance from the center CTna of the first area 922 is minimal while moving the center CTnc of the third area 928, and match the center CTna of the first area 922 and the center CTnc of the third area 928 with the corresponding location.

Meanwhile, after completing the matching of the center CTna of the first area 922 and the center CTnc of the third area 928, the signal processing device 170 may be configured to output the third image 930 of the third aspect ratio to which the first area 922 is enlarged by scaling the first area 922.

Accordingly, the signal processing device 170 may be configured to transform the image of the first aspect ratio which is the horizontal mode to the image of the third aspect ratio which is the vertical mode, and transform the image of the third aspect ratio to the person-centered image.

Meanwhile, similarly to FIG. 9E, the signal processing device 170 may be configured to receive the first image 920 of the first aspect ratio which is the horizontal model, extract the first area 922 including the upper body corresponding to a part of a body in the first image 920, and control to the second image of the first aspect ratio centered on the first area on the display 180.

That is, in response to the display corresponding to the first aspect ratio, the signal processing device 170 may be configured to display an image in which the first area is more enlarged than the first image in the display 180 in the image display mode.

As described above, the signal processing device 170 may be configured to extract the first area 922 including the upper body corresponding to a part of a body in the first image 920 in the image display mode to generate the second image of the first aspect ratio in which the first image 920 is enlarged. Accordingly, the image display apparatus may display the person-centered image in the image display mode.

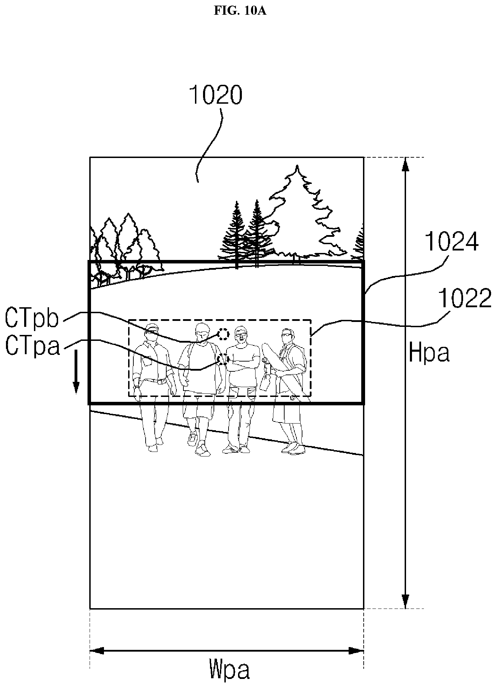

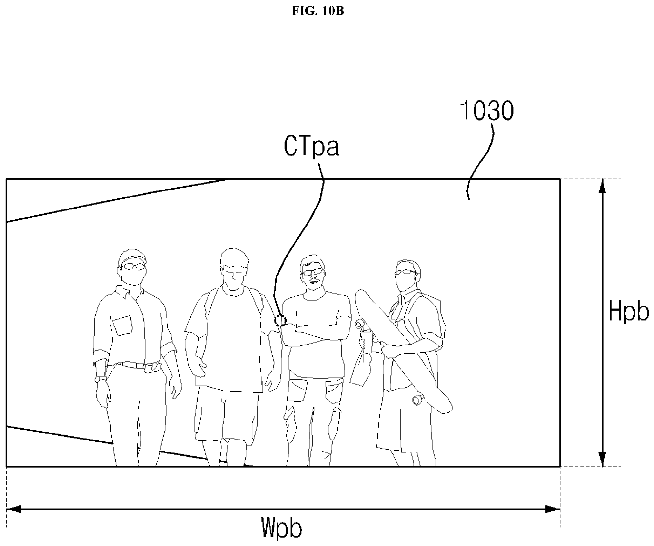

FIG. 10A illustrates an example of extraction of a first area including a plurality of upper body areas in the first image, and FIG. 10B is a diagram illustrating an example of the second image of the second aspect ratio.

Referring to the drawing, as in FIG. 10A, when a plurality of bodies are included in a first image 1020 which is a first aspect ratio, the signal processing device 170 may be configured to extract a first area 1022 including an upper body of each of the plurality of bodies.

Alternatively, in response to a plurality of bodies being included in the first image 1020 of the first aspect ratio, the signal processing device 170 may be configured to extract the first area 1022 including upper bodies of the plurality of bodies.

At this time, the first aspect ratio may be Wpa:Hpa, and may be, for example, 9:16. That is, the first aspect ratio may correspond to a vertical mode.

In the drawing, it is illustrated that there are a plurality of persons in the first image 1020.

For example, the signal processing device 170 may be configured to extract an upper body area through training processing for the plurality of persons in the first image 1020, and extract the first area 1022 including a plurality of upper body areas.

Next, when transforming the image after extracting the first area 1022, the signal processing device 170 may be configured to output a second image 1030 of a second aspect ratio as in FIG. 10B based on a center CTpa of the first area 1022 and a center CTpb of a second area 1024 corresponding to the second aspect ratio.

At this time, the second aspect ratio may be Wpb:Hpb, and may be, for example, 16:9. That is, the second aspect ratio may correspond to a horizontal mode.

For example, the signal processing device 170 may be configured to search a location at which a distance from the center CTpa of the first area 1022 is minimal while moving the center CTpb of the second area 1024, and match the center CTpa of the first area 1022 and the center CTpb of the second area 1024 with the corresponding location.

Meanwhile, after completing the matching of the center CTpa of the first area 1022 and the center CTpb of the second area 1024, the signal processing device 170 may be configured to output a second image 1030 of the second aspect ratio to which the first area 1022 is enlarged by scaling the first area 1022.

Accordingly, the signal processing device 170 may transform the image 1020 of the first aspect ratio which is the vertical mode to the image 1030 of the second aspect ratio which is the horizontal mode, and transform the image 1030 of the second aspect ratio to the person-centered image.

Consequently, the upper body-centered image 1030 of the body may be displayed in the image display mode. In particular, as in the drawing, upper body-centered images 1030 of a plurality of persons may be displayed.

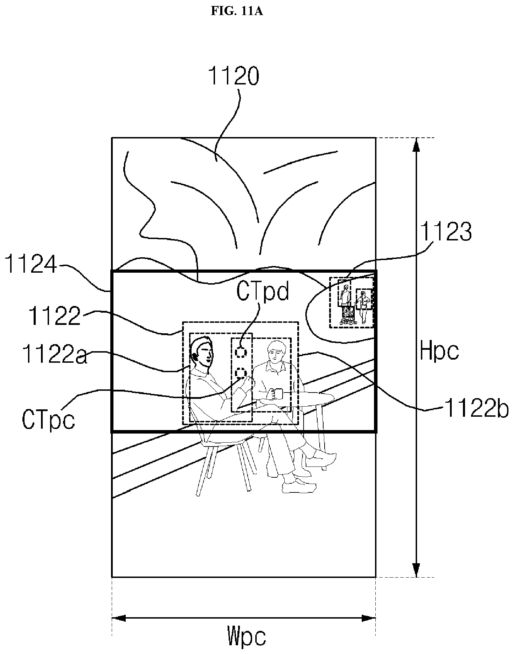

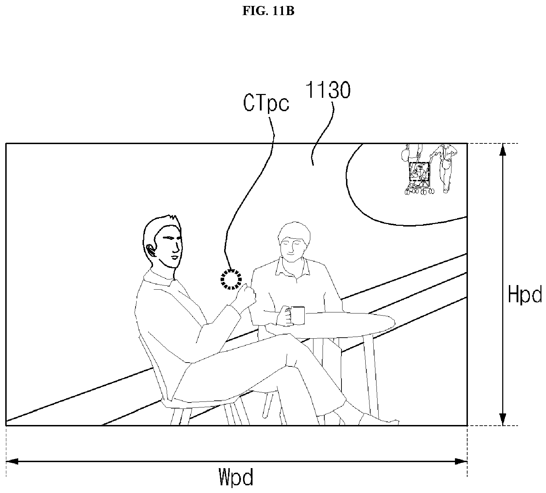

FIG. 11A illustrates another example of extraction of the first area including the plurality of upper body areas in the first image, and FIG. 11B is a diagram illustrating another example of the second image of the second aspect ratio.

Referring to the drawing, in response to a plurality of bodies being included in the first image 1120 with the first aspect ratio as in FIG. 11A, the signal processing device 170 may be configured to extract a first area 1122 including upper bodies of some of the plurality of bodies, and a second area 1123 including upper bodies of some others of the plurality of bodies, and select the first area 1122 closer to the center between the first area 1122 and the second area 1123.

At this time, the first aspect ratio may be Wpc:Hpc, and may be, for example, 9:16. That is, the first aspect ratio may correspond to the vertical mode.

Meanwhile, the signal processing device 170 may be configured to display a second image 1130 of a second aspect ratio centered on the selected first area 1122 on the display 180.

For example, when transforming the image after extracting the first area 1122, the signal processing device 170 may be configured to output the second image 1130 of the second aspect ratio as in FIG. 11B based on a center CTpc of the first area 1122 and a center CTpd of the third area 1124 corresponding to the second aspect ratio.

At this time, the second aspect ratio may be Wpd:Hpd, and may be, for example, 16:9. That is, the second aspect ratio may correspond to the horizontal mode.

Accordingly, the signal processing device 170 may be configured to transform the image 1120 of the first aspect ratio which is the vertical mode to the image 1130 of the second aspect ratio which is the horizontal mode, and transform the image 1030 of the second aspect ratio to the person-centered image.

Meanwhile, when the signal processing device 170 extracts a plurality of areas 1122 and 1123 including the upper body corresponding to a part of a body in the first image 1120, and the plurality of areas 1122 and 1123 are spaced apart from each other, the signal processing device 170 may be configured to extract the area 1122 closest to the center between the plurality of areas 1122 and 1123 as the first area.

That is, when the signal processing device 170 extracts the plurality of areas 1122 and 1123 including the upper body corresponding to a part of a body in the first image 1120, and the plurality of areas 1122 and 1123 are spaced apart from each other, the signal processing device 170 may exclude the area 1123 spaced apart from the center between the plurality of areas 1122 and 1123 from the first area 1122.

Accordingly, an area closer to the image center may be extracted as the first area, and Accordingly, the focused person-centered image may be displayed.

Meanwhile, the signal processing device 170 may be configured to extract the plurality of areas 1122 and 1123 including the upper body corresponding to a part of a body in the first image 1120, and extract an area 1122 having a largest size between the plurality of areas 1122 and 1123 as the first area. Accordingly, the focused person-centered image may be displayed.

Meanwhile, the signal processing device 170 may be configured to extract the plurality of areas 1122 and 1123 including the upper body corresponding to a part of a body in the first image 1120, and exclude an area 1123 in which a size is less than a reference value between the plurality of areas 1122 and 1123, and extract the remaining area 1122 as the first area.

Meanwhile, when the signal processing device 170 extracts a plurality of areas 1122a and 1122b including the upper body corresponding to a part of a body in the first image 1120, and the plurality of areas 1122a and 1122b are adjacent to each other, the signal processing device 170 may be configured to extract the first area 1122 including the plurality of areas 1122a and 1122b. Accordingly, the focused person-centered image may be displayed.

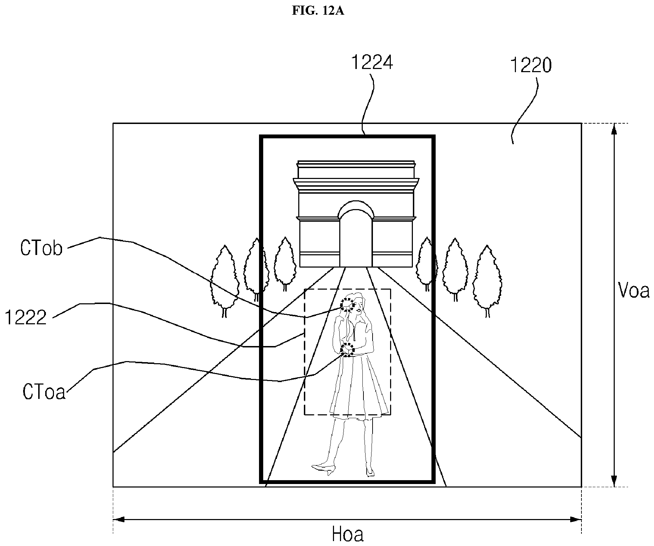

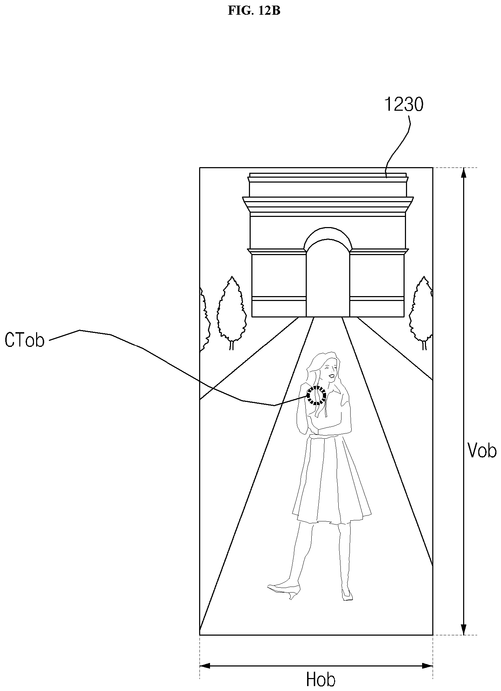

FIGS. 12A and 12B illustrate that the first image is transformed to the vertical mode.

Referring to the drawing, as in FIG. 12A, the signal processing device 170 may be configured to extract the first image 1220 including the upper body of a part of a body in the first image 1220 which is the first aspect ratio.

At this time, the first aspect ratio may be Hoa: Voa, and may be, for example, 4:3. That is, the first aspect ratio may correspond to the horizontal mode.

Meanwhile, the signal processing device 170 may be configured to display a second image 1230 of a second aspect ratio centered on the extracted first area 1230 on the display 180.

For example, when transforming the image after extracting the first area 1222, the signal processing device 170 may be configured to output the second image 1230 of the second aspect ratio as in FIG. 12B based on a center CToa of the first area 1222 and a center CTob of the second area 1224 corresponding to the second aspect ratio.

At this time, the second aspect ratio may be Hob:Vob, and may be, for example, 9:16. That is, the second aspect ratio may correspond to the vertical mode.

Accordingly, the signal processing device 170 may be configured to transform the image 1220 of the first aspect ratio which is the horizontal mode to the image 1230 of the second aspect ratio which is the vertical mode, and transform the image 1230 of the second aspect ratio to the person-centered image.

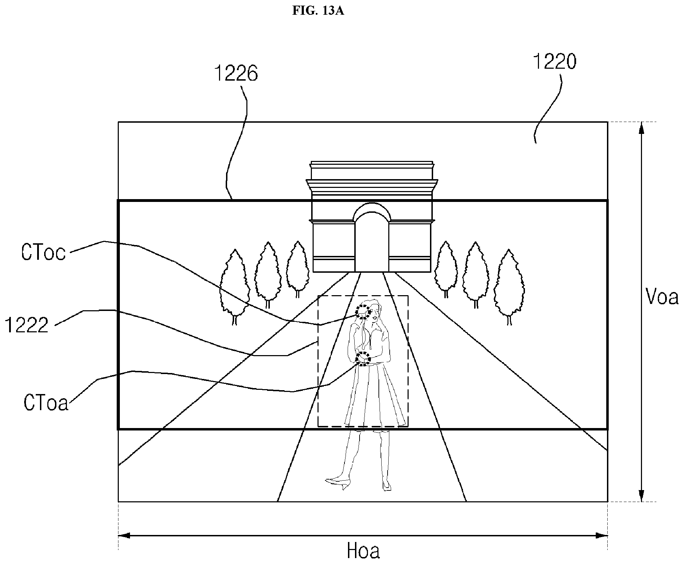

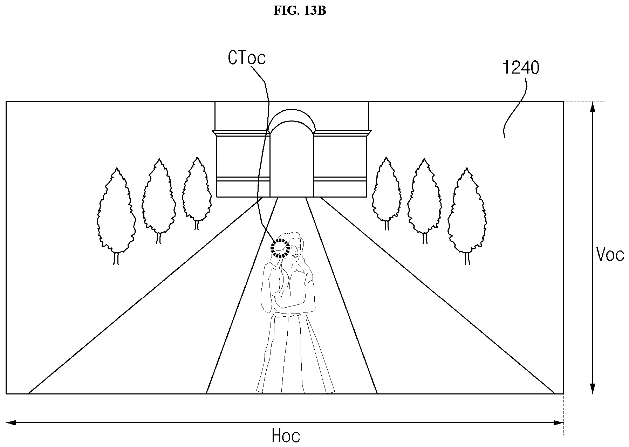

FIGS. 13A and 13B illustrate that the first image is transformed to the horizontal mode.

Referring to the drawing, as in FIG. 13A, the signal processing device 170 may be configured to extract the first area 1222 including the upper body of a part of a body in the first image 1220 which is the first aspect ratio.

At this time, the first aspect ratio may be Hoa:Voa, and may be, for example, 4:3. That is, the first aspect ratio may correspond to the horizontal mode.

Meanwhile, the signal processing device 170 may be configured to display a second image 1240 of a second aspect ratio centered on the extracted first area 1222 on the display 180.

For example, when transforming the image after extracting the first area 1222, the signal processing device 170 may be configured to output the second image 1240 of the second aspect ratio as in FIG. 13B based on the center CToa of the first area 1222 and the center CTob of the second area 1226 corresponding to the second aspect ratio.

At this time, the second aspect ratio may be Hoc: Voc, and may be, for example, 16:9. That is, the second aspect ratio may correspond to the horizontal mode.

Accordingly, the signal processing device 170 may be configured to transform the image 1220 of the first aspect ratio which is the horizontal mode to the image 1240 of the second aspect ratio which is the horizontal mode, and transform the image 1240 of the second aspect ratio to the person-centered image.

Meanwhile, when FIGS. 12A to 13B are aggregated, when the display 180 is in the horizontal mode as in FIG. 13B, the signal processing device 170 may be configured to transform the image 1220 of the first aspect ratio to the image 1240 of the second aspect ratio which is the horizontal mode, and transform the second image 1240 of the second aspect ratio and display the image 1240 based on 16:9 as in FIG. 13B.

Meanwhile, when the display 180 is in the vertical mode as in FIG. 12B, the signal processing device may be configured to transform the image 1220 of the first aspect ratio to the image 1230 of the second aspect ratio which is the vertical mode, and display the image 1230 based on 9:16.

That is, when the display 180 rotates, and is switched from the first aspect ratio which is the horizontal mode to the second aspect ratio which is the vertical mode, the signal processing device 170 may be configured to display the second image 1230 of the second aspect ratio centered on the first area 1222 on the display 180 as in FIG. 12B.

Meanwhile, when the display 180 rotates, and is switched from the second aspect ratio which is the vertical mode to the first aspect ratio which is the horizontal mode, the signal processing device 170 may be configured to display the image 1240 including the first area 1222 on the display 180 as in FIG. 13B. Accordingly, the image display apparatus may display the person-centered image in the image display mode.

That is, the signal processing device 170 may control the display 180 to display the image 1230 including the first area 1222 as in FIG. 13B in the case of the first aspect ratio which is the horizontal mode in the image display mode, and control the display 180 to display the second image 12330 of the second aspect ratio centered on the first area 1222 as in FIG. 12B in the case of the second aspect ratio which is the vertical mode in the image display mode. Accordingly, the image display apparatus may display the person-centered image in the image display mode.

Meanwhile, the first image 1220 of FIG. 12A or 13A may be received from the mobile terminal 600.

To this end, the image display apparatus 100 according to an embodiment of the present disclosure may further include an external device interface 130 or a network interface 135 configured to receive the first image from the mobile terminal 600.

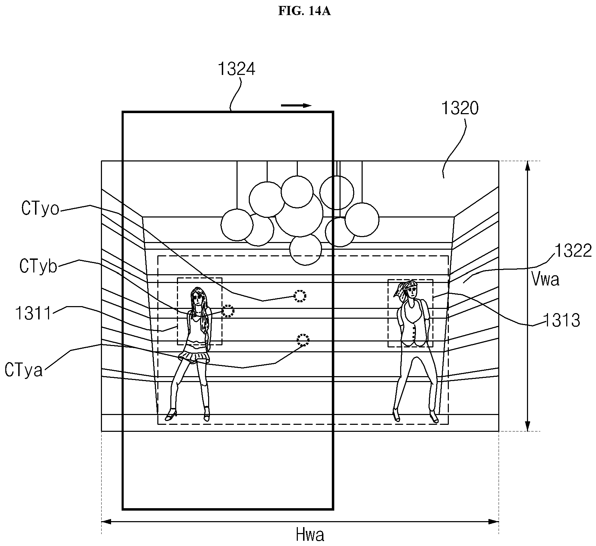

FIGS. 14A to 14C illustrate an example of surrounding area processing when transforming the first image to the second image.

Referring to the drawing, as in FIG. 14A, when a plurality of bodies are included in the first image 1320 which is the first aspect ratio, the signal processing device 170 may be configured to extract a plurality of areas 1311 and 1313 including upper bodies of some of the plurality of bodies.

At this time, the first aspect ratio may be HWa:VWa, and may be, for example, 16:11. That is, the first aspect ratio may correspond to the horizontal mode.

Meanwhile, when the plurality of extracted areas 1311 and 1313 are spaced apart from each other, the signal processing device 170 may select an area closer to a center CTyo or an area having a larger size between the plurality of areas 1311 and 1313.

Meanwhile, when the distances from the centers CTyo of the plurality of extracted areas 1311 and 1313 are almost the same, and the sizes are almost the same, even though the plurality of areas 1311 and 1313 are spaced apart from each other, the signal processing device 170 may select an area including the plurality of areas 1311 and 1313 as a first area 1322.

At this time, the signal processing device 170 may be configured to determine a size of the first area 1322 by considering a spacing distance of the plurality of areas 1311 and 1313.

That is, the signal processing device 170 may be configured to extract the first area 1322 so that a horizontal length and a vertical length of the first area 1322 are larger than the spacing distance of the plurality of areas 1311 and 1313.

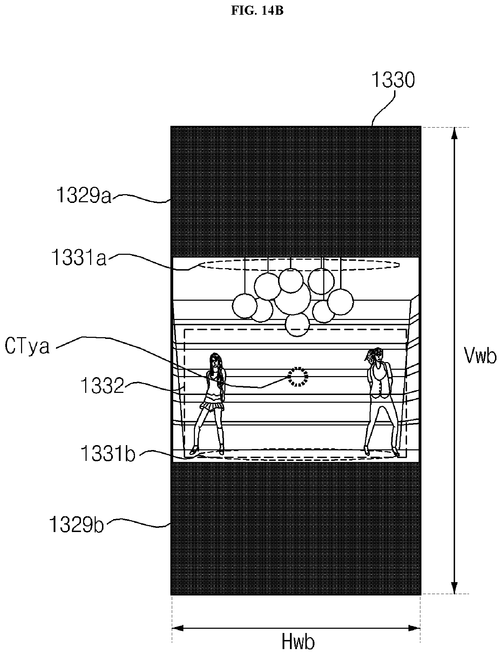

Next, when transforming the image after extracting the first area 1322, the signal processing device 170 may be configured to output a second image 1330 of the second aspect ratio as in FIG. 14B based on a center CTya of the first area 1322 and a center CTyb of the second area 1324 corresponding to the second aspect ratio.

At this time, the second aspect ratio may be HWb: VWb, and may be, for example, 9:16. That is, the second aspect ratio may correspond to the vertical mode.

Meanwhile, the second image 1330 of FIG. 14B illustrates that an upper area 1329a and a lower area 12329b which are the surroundings of the enlarged first area 1332 include a black area.

Meanwhile, the signal processing device 170 according to the embodiment of the present disclosure may be configured to display a surrounding area of the enlarged first area 1332 by using a part of the enlarged first area 1332 in order to remove the black area.

For example, the signal processing device 170 may control the upper area 1329a and the lower area 1329b which are the surroundings of the enlarged first area 1332 to parts 1331a and 1331b of the enlarged first area 1332 to be copied or partially inverted and displayed.

Specifically, the signal processing device 170 may control a part 1331a of the enlarged first area 1332 to be copied or a part 1331a to be inverted to the upper area 1329a which is the surrounding of the enlarged first area 1332 to fill the upper area 1329a.

Similarly, the signal processing device 170 may control the other part 1331b of the enlarged first area 1332 to be copied or the other part 1331b to be inverted to the lower area 1329b which is the surrounding of the enlarged first area 1332 to fill the lower area 1329b.

Accordingly, the black area illustrated in FIG. 14B may be removed. That is, the surrounding areas 1329a and 1329b are supplemented and displayed while displaying the person-centered image in the image display mode.

Meanwhile, the signal processing device 170 may be configured to perform blur processing of the surrounding areas 1329a and 1329b after the parts 1331a and 1331b of the enlarged first area 1332 are copied or inverted to, and filled in the surrounding areas 1329a and 1329b of the enlarged first area 1332. Accordingly, the surrounding areas 1329a and 1329b are supplemented and displayed while displaying the person-centered image in the image display mode.

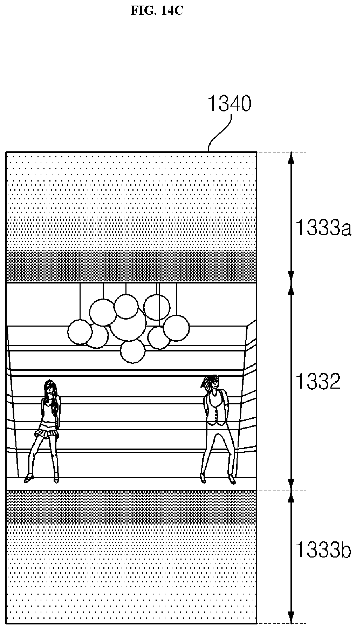

FIG. 14C illustrates a second image 1340 of a second aspect ratio in which supplementation processing of the surrounding area is completed.

That is, the second image 1340 of the second aspect ratio may include the enlarged first area 1332, and the perform blur processing of the surrounding areas 1333a and 1333b. Accordingly, the surrounding area may be supplemented and displayed while displaying the person-centered image in the image display mode.

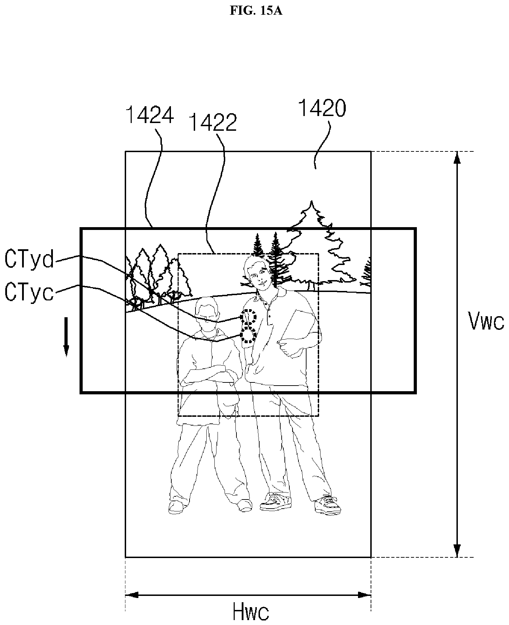

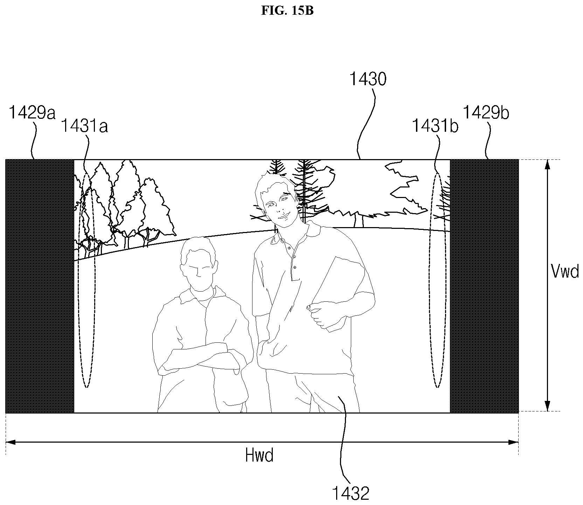

FIGS. 15A and 15B illustrate another example of surrounding area processing when transforming the first image to the second image.

Referring to the drawing, as in FIG. 15A, when a plurality of bodies are included in the first image 1420 which is the first aspect ratio, the signal processing device 170 may be configured to extract a plurality of areas 1 and 1313 including upper bodies of some of the plurality of bodies, and extract the first area 1422 including the plurality of areas in response to the plurality of areas being adjacent.

At this time, the first aspect ratio may be HWc:VWc, and may be, for example, 09:16. That is, the first aspect ratio may correspond to the vertical mode.

Next, when transforming the image after extracting the first area 1422, the signal processing device 170 may be configured to output a second image 1430 of the second aspect ratio as in FIG. 15B based on a center CTyc of the first area 1422 and a center CTyd of the second area 1424 corresponding to the second aspect ratio.

At this time, the second aspect ratio may be HWd:VWd, and may be, for example, 16:9. That is, the second aspect ratio may correspond to the horizontal mode.

Meanwhile, the second image 1430 of FIG. 14B illustrates that a left area 1429a and a right area 1429b which are the surroundings of the enlarged first area 1432 include the black area.

Meanwhile, the signal processing device 170 according to the embodiment of the present disclosure may be configured to display a surrounding area of the enlarged first area 1432 by using a part of the enlarged first area 1432 in order to remove the black area.

For example, the signal processing device 170 may control the left area 1429a and the right area 1429b which are the surroundings of the enlarged first area 1432 so that the parts 1431a and 1431b of the enlarged first area 1432 to be copied or partially inverted and displayed.

Specifically, the signal processing device 170 may control a part 1431a of the enlarged first area 1432 to be copied or a part 1431a to be inverted to the left area 1429a which is the surrounding of the enlarged first area 1432 to fill the left area 1429a.

Similarly, the signal processing device 170 may control the other part 1431b of the enlarged first area 1432 to be copied or the other part 1431b to be inverted to the right area 1429b which is the surrounding of the enlarged first area 1432 to fill the right area 1429b.

Accordingly, the black area illustrated in FIG. 15B may be removed. That is, the surrounding areas 1429a and 1429b are supplemented and displayed while displaying the person-centered image in the image display mode.

Meanwhile, the signal processing device 170 may perform blur processing of the surrounding areas 1429a and 1429b after a part of the enlarged first area 1432 is copied or inverted to, and filled in the surrounding areas 1429a and 1429b of the enlarged first area 1432. Accordingly, the surrounding areas 1429a and 1429b are supplemented and displayed while displaying the person-centered image in the image display mode.

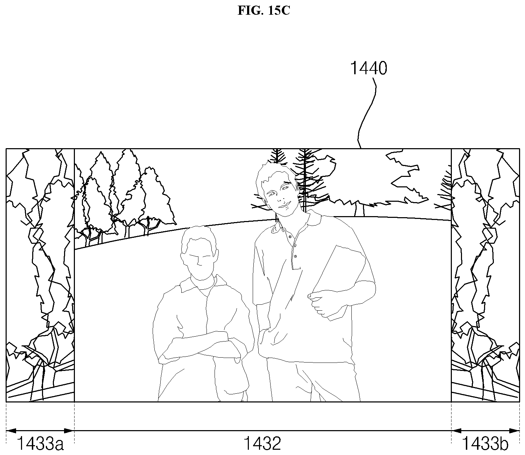

FIG. 15C illustrates a second image 1440 of a second aspect ratio in which supplementation processing of the surrounding area is completed.

That is, the second image 1440 of the second aspect ratio may include the enlarged first area 1432, and the perform blur processing of the surrounding areas 1433a and 1433b. Accordingly, the surrounding area may be supplemented and displayed while displaying the person-centered image in the image display mode.

As described above, an image display apparatus according to an embodiment of the present disclosure comprises a display, and a signal processing apparatus that controls to receive a first image of a first aspect ratio, extract a first area including an upper body corresponding to a part of a body in the first image, and display a second image of a second aspect ratio centered on the first area on the display in an image display mode. Accordingly, the image display apparatus may display a person-centered image in the image display mode.

Meanwhile, the signal processing apparatus may be configured to extract coordinates for each body part in the first image, extract a first area corresponding to an upper body among a plurality of coordinates for each body part, and output the second image of the second aspect ratio based on a center of the first area and a center of the second area corresponding to the second aspect ratio. Accordingly, an upper body-centered image of the body may be displayed in the image display mode.

Meanwhile, in response to a plurality of bodies being included in the first image, the signal processing apparatus may be configured to extract the first area including the upper body corresponding to each of the plurality of bodies, and display the second image of the second aspect ratio centered on the first area. Accordingly, a plurality of person-centered images may be displayed in the image display mode.

Meanwhile, in response to a size of the first area being less than a size of the second area corresponding to the second aspect ratio, the signal processing apparatus may be configured to output the second image of the second aspect ratio based on the second area including the first area. Accordingly, the image display apparatus may display the person-centered image in the image display mode.

Meanwhile, in response to a plurality of bodies being included in the first image, the signal processing apparatus may be configured to extract the first area including some upper bodies among the plurality of bodies, and a second area including some other upper bodies among the plurality of bodies, and select the first area closer to the center between the first area and the second area. Accordingly, the image display apparatus may display the person-centered image in the image display mode.

Meanwhile, the signal processing device may be configured to display a second image of a second aspect ratio centered on the selected first area on the display. Accordingly, the image display apparatus may display the person-centered image in the image display mode.

Meanwhile, the signal processing device may be configured to extract the first area including the upper body corresponding to each of the plurality of bodies, and display a second image of a second aspect ratio including the extracted first area and a surrounding area of the extracted first area on the display, and the surrounding area of the first area may be a part of the first area or an area in which the part of the first area is inverted. Accordingly, the surrounding area may be supplemented and displayed while displaying the person-centered image in the image display mode.

Meanwhile, in response to a plurality of bodies being included in the first image, the signal processing device may be configured to extract the first area including the upper body corresponding to each of the plurality of bodies, and perform blur processing of the surrounding area of the first area in the second image based on the first area in response to an aspect ratio of the extracted first area being different from the second aspect ratio. Accordingly, the surrounding area may be supplemented and displayed while displaying the person-centered image in the image display mode.

Meanwhile, the signal processing device may be configured to display an image including the first area in the first aspect ratio in the image display mode, and in response to the display corresponding to the second aspect ratio, display the second image of the second aspect ratio centered on the first area. Accordingly, the image display apparatus may display the person-centered image in the image display mode.

Meanwhile, in response to the display corresponding to the first aspect ratio, the signal processing device may be configured to display an image in which the first area is more enlarged than the first image in the image display mode. Accordingly, the image display apparatus may display the person-centered image in the image display mode.

Meanwhile, the signal processing device may be configured to extract a plurality of areas including the upper body corresponding to a part of a body in the first image, and extract the first area including the plurality of areas in response to the plurality of areas being adjacent to each other. Accordingly, the image display apparatus may display the person-centered image in the image display mode.

Meanwhile, the signal processing device may be configured to extract a plurality of areas including the upper body corresponding to a part of a body in the first image, and extract an area closest to a center among the plurality of areas as the first area in response to the plurality of areas being spaced apart from each other. Accordingly, the image display apparatus may display the person-centered image in the image display mode.

Meanwhile, the signal processing device may be configured to extract a plurality of areas including the upper body corresponding to a part of a body in the first image, and extract an area having the greatest size among the plurality of areas as the first area. Accordingly, the image display apparatus may display the person-centered image in the image display mode.

Meanwhile, the signal processing device may be configured to extract a plurality of areas including the upper body corresponding to a part of a body in the first image, and extract the remaining area other than an area having a size less than a reference value among the plurality of areas as the first area. Accordingly, the image display apparatus may display the person-centered image in the image display mode.

Meanwhile, the signal processing device may be configured to display the second image of the second aspect ratio centered on the first area on the display in response to an aspect ratio of the display is switched to from the first aspect ratio to the second aspect ratio by rotating the display. Accordingly, the image display apparatus may display the person-centered image in the image display mode.

Meanwhile, the signal processing device may be configured to display the image including the first area on the display in response to an aspect ratio of the display being switched to from the second aspect ratio to the first aspect ratio by rotating the display. Accordingly, the image display apparatus may display the person-centered image in the image display mode.

Meanwhile, the image display apparatus may further include an interface configured to receive the first image from a mobile terminal. Accordingly, the image display apparatus may display the person-centered image in the image display mode based on the image received from the mobile terminal.

In accordance with another embodiment of the present disclosure, an image display apparatus includes: a display; and a signal processing device configured to receive a first image of a first aspect ratio, extract coordinates for each body part in the first image, extract a first area corresponding to an upper body among a plurality of coordinates for each body part, and output the second image of the second aspect ratio based on a center of the first area and a center of the second area corresponding to the second aspect ratio. Accordingly, the image display apparatus may display the person-centered image in the image display mode. In particular, the upper body-centered image of the body may be displayed in the image display mode.

In accordance with yet another embodiment of the present disclosure, an image display apparatus comprises a display; and a signal processing device configured to receive a first image of a first aspect ratio, extract a first area corresponding to an upper body in a body in the first image, and display a second image of a second aspect ratio centered on the first area on the display. Accordingly, the image display apparatus may display the person-centered image in the image display mode. In particular, the upper body-centered image of the body may be displayed in the image display mode.

While the embodiments of the present disclosure have been illustrated and described above, the present disclosure is not limited to the aforementioned specific embodiments, various modifications may be made by a person with ordinary skill in the technical field to which the present disclosure pertains without departing from the subject matters of the present disclosure that are claimed in the claims, and these modifications should not be appreciated individually from the technical spirit or prospect of the present disclosure.

## Claims

1. An image display apparatus (100) comprising:
a display (180); and
a signal processing device (170) configured to receive a first image of a first aspect ratio, extract a first area including an upper body corresponding to a part of a body in the first image, and display a second image of a second aspect ratio centered on the first area on the display in an image display mode.

2. The image display apparatus of claim 1, wherein the signal processing device (170) is configured to extract coordinates for each body part in the first image, extract the first area corresponding to an upper body among a plurality of coordinates for each body part, and output the second image of the second aspect ratio based on a center of the first area and a center of the second area corresponding to the second aspect ratio.

3. The image display apparatus of any one of claims 1 to 2, wherein in response to a plurality of bodies being included in the first image, the signal processing device (170) is configured to extract the first area including the upper body corresponding to each of the plurality of bodies, and display the second image of the second aspect ratio centered on the first area.

4. The image display apparatus of claim 3, wherein in response to a size of the first area being less than a size of the second area corresponding to the second aspect ratio, the signal processing device (170) is configured to output the second image of the second aspect ratio based on the second area including the first area.

5. The image display apparatus of any one of claims 1 to 2, wherein in response to a plurality of bodies being included in the first image, the signal processing device (170) is configured to extract the first area including some upper bodies among the plurality of bodies, and a second area including some other upper bodies among the plurality of bodies, select the first area closer to the center between the first area and the second area, and display a second image of a second aspect ratio centered on the selected first area on the display.

6. The image display apparatus of any one of claims 1 to 2, wherein the signal processing device (170) is configured to, in response to a plurality of bodies being included in the first image, extract the first area including the upper body corresponding to each of the plurality of bodies, and display a second image of a second aspect ratio including the extracted first area and a surrounding area of the extracted first area on the display, and
wherein the surrounding area of the first area includes a part of the first area or an area in which the part of the first area is inverted.

7. The image display apparatus of any one of claims 1 to 2, wherein in response to a plurality of bodies being included in the first image, the signal processing device (170) is configured to extract the first area including the upper body corresponding to each of the plurality of bodies, and perform blur processing of the surrounding area of the first area in the second image based on the first area in response to an aspect ratio of the extracted first area being different from the second aspect ratio.

8. The image display apparatus of any one of claims 1 to 7, wherein in the image display mode, the signal processing device (170) is configured to, in response to the display corresponding to the first aspect ratio, display an image including the first area, and in response to the display corresponding to the second aspect ratio, display the second image of the second aspect ratio centered on the first area.

9. The image display apparatus of any one of claims 1 to 7, wherein in response to the display corresponding to the first aspect ratio the signal processing device (170) is configured to display an image in which the first area is more enlarged than the first image in the image display mode.

10. The image display apparatus of claim 1, wherein the signal processing device (170) is configured to extract a plurality of areas including the upper body corresponding to a part of a body in the first image, and extract the first area including the plurality of areas in response to the plurality of areas being adjacent to each other.

11. The image display apparatus of claim 1, wherein the signal processing device (170) is configured to extract a plurality of areas including the upper body corresponding to a part of a body in the first image, and extract an area closest to a center among the plurality of areas as the first area in response to the plurality of areas being spaced apart from each other.

12. The image display apparatus of claim 1, wherein the signal processing device (170) is configured to extract a plurality of areas including the upper body corresponding to a part of a body in the first image, and extract an area having the greatest size among the plurality of areas as the first area.

13. The image display apparatus of claim 1, wherein the signal processing device (170) is configured to extract a plurality of areas including the upper body corresponding to a part of a body in the first image, and extract the remaining area other than an area having a size less than a reference value among the plurality of areas as the first area.

14. The image display apparatus of any one of claims 1 to 7, wherein the signal processing device (170) is configured to display the second image of the second aspect ratio centered on the first area on the display in response to an aspect ratio of the display is switched to from the first aspect ratio to the second aspect ratio by rotating the display.

15. The image display apparatus of any one of claims 1 to 7, wherein the signal processing device (170) is configured to display the image including the first area on the display in response to an aspect ratio of the display being switched to from the second aspect ratio the first aspect ratio by rotating the display.
